# EUROPEAN PATENT SPECIFICATION

(11) **EP 4 308 373 B1**
(45) Date of publication and mention of the grant of the patent: **29.01.2025**
(21) Application number: 22715577.7
(22) Date of filing: 15.03.2022
(51) Int. Cl.: B32B 5/02, B32B 5/26, B32B 7/14

(54) **AQUEOUS WATER-BASED BONDING SYSTEM FOR FLAME-RETARDANT COMPOSITE**
WÄSSRIGES WASSERBASIERTES BINDUNGSSYSTEM FÜR FLAMMHEMMENDE VERBUNDSTOFFE
SYSTÈME DE LIAISON AQUEUX À BASE D'EAU POUR COMPOSITE IGNIFUGE

(30) Priority: 15.03.2021 US 202163161091 P
(43) Date of publication of application: 24.01.2024
(73) Proprietor: W. L. Gore & Associates GmbH, 85640 Putzbrunn (DE)
(72) Inventor: FUCHS, Joachim, 85640 Putzbrunn (DE)
(74) Representative: HGF
(86) International application number: PCT/EP2022/056713
(87) International publication number: WO 2022/194872

(56) References cited:
- EP-A1- 2 679 109
- WO-A1-2020/163980
- WO-A1-2020/193453

## Description

### CROSS-REFERENCE TO RELATED APPLICATION

### FIELD

The present disclosure relates to burn protective materials, and more particularly, to flame-retardant composites with high flame-resistant additives and aqueous water-based bonding systems.

### BACKGROUND

To reduce fire related burn injuries, protective clothing is desired for professionals working in hazardous environments where short duration exposure to fire is possible, such as search and rescue, and police. Protective gear for workers exposed to these conditions should provide some enhanced protection to allow the wearer to get away from the hazard quickly and safely, rather than to combat the hazard.

Traditionally, flame resistant protective garments have been made with an outermost layer of an ensemble (the flame-contacting layer) comprising non-combustible, non-melting fabric made of, for example, aramids, polybenzimidazole (PBI), poly p-phenylene-2,6-benzobisoxazole (PBO), modacrylic blends, polyamines, carbon, polyacrylonitrile (PAN), and blends and combinations thereof. These fibers may be inherently flame resistant but may have several limitations. Specifically, these fibers may be very expensive, difficult to dye and print, and may not have adequate abrasion resistance. Additionally, these fibers pick up more water and offer unsatisfactory tactile comfort as compared to nylon or polyester based fabrics.

EP 2322710 in the name of W.L. Gore and Associates GmbH describes an article comprising a textile made of fibers/filaments having a partially internal discontinuous pattern of an impregnating material which penetrates the textile. The non-impregnated areas are air permeable and the textile is water vapor permeable and has reduced water absorption and re-dry time.

EP 2679109 in the name of W.L. Gore and Associates GmbH describes material suitable for use in garments for workers in hazardous environments, which is breathable, waterproof, and flame resistant comprising a heat reactive material comprising a polymer resin-expandable graphite mixture, wherein the expandable graphite has an expansion of at least 900 µm upon heating to 280°C.

For optimum user performance in environments with occasional flash fire exposure, a lightweight, breathable, garment with enhanced burn protection is desired. The cost of flame resistant, protective clothing has been an important consideration for the large number of hazardous exposure applications outside fire protection, thereby precluding the use of typical, inherently flame-resistant textiles such as those used in firefighting community.

### SUMMARY

The invention is related to articles and methods according to the independent claims, providing flame-retardant composites with high flame-resistant additives and aqueous water-based bonding systems, and method of making the same.

In a first aspect, there is provided a textile composite comprising: a) a meltable layer; b) a heat reactive material comprising: a polymer resin comprising an aqueous acrylic resin, expandable graphite, at least one flame retardant (FR) additive, and at least one polyhydroxy compound; and c) an additional layer disposed on the heat reactive material so that the heat reactive material is between the meltable layer and the additional layer; wherein the textile composite has an afterflame of less than about 2 seconds.

The polyhydroxy compound may have a molecular weight of less than about 1000 g/mol, less than about 500 g/mol, less than about 250 g/mol, or less than about 100 g/mol.

The polyhydroxy compound may be propane-1,2,3-triol, which also may be referred to as glycerol.

The textile composite may have a dry peel strength in the range of from about 5 to about 30 Newtons (N) as measured by DIN 54310.

The heat reactive material may be applied to the meltable layer. The heat reactive material may be applied to the additional layer. The heat reactive material may be applied to both the meltable layer and the additional layer. The heat reactive material may be applied in a continuous pattern. The heat reactive material may be applied in a discontinuous pattern.

The heat reactive material may be applied in a discontinuous pattern of dots.

The expandable graphite may expand at least about 900 micrometers upon heating to about 280°C, as measured by the TMA Expansion Test described herein.

The at least one FR additive may comprise nitrogen based materials and/or phosphorous based materials. The at least one FR additive may be melamine. The at least one FR additive may be polyphosphate. The at least one FR additive may be a combination of melamine and polyphosphate. The at least one FR additive may be melamine polyphosphate.

The heat reactive material may comprise the polyhydroxy compound in a range of from about 3 to about 20 wt%, or from about 3 to about 10 wt%, or from about 3 to about 5 wt%, based on a total weight of the heat reactive material. The polyhydroxy compound may be propane-1,2,3-triol.

The heat reactive material may comprise acrylic polymer and a mixture of expandable graphite and at least one polyhydroxy compound. The heat reactive material may comprise in the range of from about 40 to about 90 wt% of acrylic polymer, based on a total weight of the heat reactive material. The heat reactive material may comprise in the range of from about 10 to about 60 wt% of the mixture of the expandable graphite and the polyhydroxy compound, based on a total weight of the heat reactive material. The heat reactive material may comprise in the range of from about 40 to about 90 wt% of acrylic polymer and from about 10 to about 60 wt% of the mixture of the expandable graphite and the polyhydroxy compound, based on a total weight of the heat reactive material. The percentages by weight as used above are based on the total weight of the heat reactive material minus any volatiles that may be present, for example, water or other organic molecules that may evaporate during the drying and curing process.

The additional layer may be a textile layer. The additional layer may be a thermally stable textile layer. The additional layer may be a combination of a textile layer and a thermally stable textile layer.

The additional layer may comprise one or more of: an aramid, flame resistant cotton, cotton, flax, cuprammonium rayon (cupro), acetate, triacetate, wool, viscose, polybenzimidazole (PBI), polybenzoxazole (PBO), FR rayon, modacryl, modacryl/cotton blend, polyamine, fiberglass, polyacrylonitrile, polytetrafluoroethylene or a combination thereof. The additional layer may comprise cotton, cupro, viscose or a combination thereof.

The additional layer may comprise at least one meltable material. The meltable material may be flammable. Textiles which are considered as meltable include but are not limited to polyamides such as nylon 6 or nylon 6,6, polyester, polypropylene.

The aqueous acrylic resin may comprise acrylamide repeat units.

The aqueous acrylic resin may comprise N-methylol acrylamide repeat units.

The polymer resin may be an aqueous acrylic resin.

The polymer resin comprises at least 25 wt% of an aqueous acrylic resin based on the total weight of the polymer resin and at least one polymer resin that comprises vinyl acetate, styrene, polyether, polyester, polyurethane, polyether polyurethane, polyester polyurethane, polycarbonate polyurethane or a copolymer or a blend thereof.

The heat reactive material may cover in the range of from about 25 to about 100% of the surface area of the meltable layer. The heat reactive material may cover in the range of from about 25 to about 100% of the surface area of the additional layer.

The textile composite may have a weight in the range of from about 80 to about 240 grams per square meter (gsm), as measured by DIN EN 12127 (1997/12).

The textile composite may have an air permeability of at least about 50 l/m²s, measured according to DIN ISO 9237 (1995). The textile composite may have an air permeability greater than about 50 l/m²s. The textile composite may have an air permeability from about 50 l/m²s to about 500 l/m²s, measured according to DIN ISO 9237 (1995). The textile composite may have an air permeability from about 75 l/m²s to about 500 l/m²s, or from about 100 l/m²s to about 500 l/m²s, or from about 125 l/m²s to about 500 l/m²s, or from about 150 l/m²s to about 500 l/m²s, or from about 175 l/m²s to about 500 l/m²s, or from about 50 l/m²s to about 100 l/m²s, or from about 75 l/m²s to about 100 l/m²s, or from about 120 l/m²s to about 150 l/m²s, or from about 130 l/m²s to about 170 l/m²s, or from about 140 l/m²s to about 180 l/m²s, or from about 150 l/m²s to about 190 l/m²s, measured according to DIN ISO 9237 (1995). Optionally, the textile composite may have an air permeability greater than about 150 l/m²s, measured according to DIN ISO 9237 (1995).

The meltable layer and the additional layer may be adhered together by the heat reactive material.

In a second aspect, there is provided a garment comprising the textile composite described herein.

In a third aspect, there is provided a heat reactive composition comprising i) a polymer resin comprising an aqueous acrylic resin, ii) expandable graphite that expands at least about 900 micrometers upon heating at about 280°C, as measured by the TMA expansion test described herein; and iii) at least one flame retardant additive, iv) a polyhydroxy compound; and v) water.

The heat reactive composition may comprise the polyhydroxy compound in a range of from about 3 to about 10 wt%, or from about 3 to about 8 wt%, or from about 3 to about 7 wt%, based on a total weight of the heat reactive material.

The heat reactive composition may comprise in the range of from about 60 to about 80 wt% aqueous acrylic resin, from about 5 to about 10 wt% expandable graphite; from about 5 to about 10 wt% flame retardant additive, from about 5 to about 10 wt% the polyhydroxy compound, and from about 5 to about 10 wt% water, based on the total weight of the heat reactive composition.

The polyhydroxy compound may be propane-1 ,2,3-triol and the aqueous acrylic resin may comprises acrylamide repeat units.

The terms "heat reactive material" and "heat reactive composition" are used to describe the same material component, but in different conditions. A heat reactive composition is the wet or aqueous combination of polymer resin comprising aqueous acrylic resin and a mixture of expandable graphite, at least one FR additive and at least one polyhydroxy compound before applying to the meltable layer and/or the additional layer. A heat reactive material is the dry combination of polymer resin comprising aqueous acrylic resin and a mixture of expandable graphite, at least one of FR additive, and at least one polyhydroxy compound after the heating step during the manufacture of the textile composite. The heat reactive material is the dried combination of aqueous acrylic resin and a mixture of expandable graphite and at least one of FR additive within the textile composite of the disclosure.

In a fourth aspect, there is provided a method of forming or manufacturing the textile composite described herein, the method comprising: a) providing a meltable layer and an additional layer; b) applying a heat reactive composition onto the meltable layer, the additional layer or both, wherein the heat reactive composition comprises an aqueous acrylic resin, expandable graphite, at least one flame retardant additive, at least one polyhydroxy compound and water, c) adhering the meltable layer and the additional layer together with the heat reactive composition sandwiched between the two layers to form a laminate; and d) heating the laminate to a temperature sufficient to remove at least a portion of the water from the aqueous acrylic resin.

The application step may comprise applying the heat reactive composition in a discontinuous pattern.

The laminate formed may have a length of about 400 meter or more, or of about 500 meter or more, or of about 1000 meter or more.

The method may comprise applying a durable water repellent coating on the meltable layer.

The meltable layer may be a textile layer. The meltable layer may comprise one or more of: a woven, a knit, a non-woven material, or a combination thereof. The meltable layer may be a multilayer textile comprising one or more of wovens, knits and/or nonwoven textiles. The textile used for the meltable layer may comprise one or more of: polyamides, for example nylon, nylon 6, nylon 6.6; polyester, polyethylene terephthalate, polytrimethylene terephthalate, polybutylene terephthalate; polyurethane; polyolefin, polyethylene, polypropylene, elastane. The meltable layer may be a polyamide or a polyester. The meltable may be a blend or a combination of polyamides, for example nylon, nylon 6, nylon 6.6; polyester, polyethylene terephthalate, polytrimethylene terephthalate, polybutylene terephthalate; polyurethane; polyolefin, polyethylene, polypropylene and/or elastane.

The meltable layer may comprise more than one meltable textile. For example, the meltable layer may comprise a combination of two or more of nylon, nylon 6, nylon 6.6, polyester, polyethylene terephthalate, polytrimethylene terephthalate, polybutylene terephthalate, polyurethane, polyolefin, polyethylene, elastane, and polypropylene.

The meltable layer may be a meltable film wherein the meltable film can be a microporous or a nonporous film. The meltable film can be a nonporous and gas impermeable film and may be a meltable continuous film that covers, for example, all or part of an article or garment. A meltable continuous film does not allow chemicals or biological materials to penetrate from the surface of the composite article to the wearer. The meltable film may be a single film layer or a multilayer film. In a flame resistant composite article, the meltable film may be a microporous polyolefin, a microporous polyester, or a microporous polyurethane.

The meltable film may comprise polyolefin, polyethylene, polypropylene, ethyl vinyl alcohol (EVOH), ethyl vinyl acetate (EVAc), polyvinyl chloride (PVC), polyvinylidene chloride (PVdC), polyvinyl fluoride, polyvinylidene fluoride, fluoropolymers, polyurethane, polyesters, polyamides, polyethers, polyacrylates and polymethacrylates, copolyetheresters, or copolymers or multilayer laminates thereof.

The meltable layer may be light weight. The meltable layer may have a weight of equal or less than about 120 grams per square meter (g/m²), equal or less than about 110g/m², equal or less than about 100g/m², equal or less than about 90 g/m², equal or less than about 80g/m², equal or less than 70g/m², equal or less than 60g/m², equal or less than 50g/m², equal or less than about 45 g/m², equal or less than about 40g/m², equal or less than about 35 g/m², equal or less than about 30g/m², equal or less than about 25g/m², or equal or less than about 20 g/m². In other embodiments, the meltable layer can be greater than or equal to about 10 g/m² or greater than or equal to 15 g/m². All weight measurements are performed by DIN EN 12127 (1997/12).

The meltable layer may be a meltable, non-flammable textile. The meltable layer may comprise phosphonate modified polyesters (such as materials sold under the trade name TREVIRA^{®} CS and AVORA^{®} FR). The meltable layer may comprise a meltable, non-flammable textile which is not typically intended for use in flame resistant laminates intended for garment applications. The textile composite may comprise a meltable, non-flammable textile which is not typically intended for use in flame resistant laminates intended for garment applications, and it may further comprise a heat reactive material and an additional layer disposed on the heat reactive material so that the heat reactive material is between the meltable layer and the additional layer. The textile composite may be used in flame resistant laminate applications.

The meltable layer may be a multilayered textile. The meltable layer may be a multilayered textile comprising two or more layers. The meltable layer may be a multilayered textile comprising two or more textile layers. The meltable layer may be a multilayered textile comprising two or more layers selected from knit textile layer, woven textile layer and/or nonwoven textile layer. The meltable layer may comprise a multilayered textile comprising two or more layers, wherein at least one of the layers is a meltable textile. The meltable layer may comprise a multilayered textile comprising two or more layers, wherein each of the layers is a meltable textile. The textile layers in a multilayered textile may be layered on top of each other.

A garment may comprise the textile composite described herein, wherein the meltable layer is the outer layer. The meltable outer layer may comprise a multilayered textile. Where a multilayered textile is used as the meltable outer layer, each individual meltable layer may be chosen independently of one another.

The use of meltable textiles may be beneficial because such materials can be lightweight, cheap, and easy to dye and print and have an adequate abrasion resistance. "Adequate abrasion resistance" means the meltable textile has an abrasion resistant measured according to DIN EN ISO 12 947-2 (2006) which is equal to or higher than the abrasion resistance of polyester or poly-cotton with the same weight and construction.

The meltable layer may be, in use (for example in a garment) the outer layer which faces the environment or which faces away from a user.

The meltable layer may include one or more treatments to improve the properties of the textile composite. Such treatments can be applied to the meltable layer prior to formation of the textile composite or can be applied after formation of the textile composite.

The meltable layer may comprise a flame retardant (FR) treatment. Suitable flame retardant treatments may include, but are not limited to, the application of a flame-retardant chemical finish to the meltable layer or the addition of a chemical treatment to the fibers before they are woven or knitted into a meltable textile or fabric. The flame retardant treatment may not influence the meltable properties of the meltable layer. Flame retardant treatment may comprise treatment with nanoclays. Flame retardant treatment may comprise treatment with montmorillonite. Flame retardant treatment may comprise treatment with one or more of aluminium oxide, aluminium hydroxide (ATH), magnesium hydroxide (MDH), huntite, hydromagnesite, red phosphorus, boron borates, organochlorines, organobromines, antimony trioxide, antimony pentoxide, sodium antimonate, organophosphates, tris(2,3-dibromopropyl) phosphate , tetrabromobisphenol A (TBBPA), 2,2-bis(bromomethyl)-1,3-propanediol (BBMP), triphenylphosphate (TPP), tris(1,3-dichloro-2-propyl)phosphate (TDCPP), tris(2-chloroethyl)phosphate (TCEP), 2-ethylhexyl-2,3,4,5-tetrabromobenzoate (TBB), bis(2-ethylhexyl)3,4,5,6-tetrabromophthalate (TBPH), hexabromocyclododecane (HBCD), ammonium phosphate, ammonium sulfate, triiisopropyl phosphate, diethyl ethyl phosphate, (tris-chloroethyl) phosphate, triphenyl phosphate, tris-(2-chloroethylhexyl) phosphate, tricresyl phosphate, mono-, bis- and tri-(isopropylphenyl) phosphate, triisoprpylphenyl phosphate, resorcinol-bis-(diphenyl phosphate), bisphenol-A-bis-(diphenyl)phosphate, melamine, melamine phosphate, melamine cyanurate, melamine poly-zinc, aluminum phosphate, melamine based hindered amine light stabilizers, ethylenediamine phosphate, cyclic phosphonates, aromatic phosphonates, aliphatic phosphate esters, chloroparafin, hexabromobenzol, tetrabromophthalic anhydride or a combination thereof. Flame retardant treatment may provide FR protection to avoid, and/or decrease flammability and afterflame.

The meltable layer may comprise a treatment to provide print finish. The meltable layer may be printed in any suitable color and/or pattern. The meltable layer may be printed with any suitable dye. For example, the meltable layer may be printed with camouflage pattern. The meltable layer may be printed with a light reflective material.

The meltable layer may comprise a treatment to adjust its near infrared ray reflectance or absorbance characteristics. The meltable layer may comprise a treatment with a phthalocyanine cromogen. The meltable layer may be printed with a phthalocyanine dye. Meltable layers printed with phthalocyanine dyes may provide infrared (IR) camouflage (e.g. for military applications). Without wishing to be bound by theory, phthalocyanine cromogens can absorb light in the near infrared (NIR) region.

The meltable layer may have a hydrophobic treatment to help lower the water absorption of the textile composite. Suitable hydrophobic treatments may include, fluorochemical treatments and/or silicone-based treatments.

The meltable layer may have an insecticidal or insect repellant treatment applied, for example, permethrin or DEET.

The meltable layer may include hydrophilic or oleophobic treatments in order to impart water-wicking or dirt-repelling properties to the textile composite.

The heat reactive material may comprise a polymer resin comprising an aqueous acrylic resin. The heat reactive material may comprise an aqueous acrylic resin. The heat reactive material may comprise expandable graphite. The heat reactive material may comprise a flame retardant (FR) additive. The heat reactive material may comprise a polyhydroxy compound. The heat reactive material may comprise a polymer resin comprising an aqueous acrylic resin, expandable graphite, a flame retardant (FR) additive and a polyhydroxy compound. The heat reactive material may consist essentially of an aqueous acrylic resin, expandable graphite, a flame retardant (FR) additive and a polyhydroxy compound. As used in this context, "consists essentially of" means that the heat reactive material includes those materials listed and equal or less than about 10% (or equal or less than about 5%, or equal or less than about 4%, or equal or less than about 3%, or equal or less than about 2%, or equal or less than about 1%) by weight of any other material that may materially affect the composition. The percentages by weight are based on the total weight of the heat reactive material minus any volatiles that may be present, for example, water or other organic molecules that may evaporate during the drying and curing process.

The aqueous acrylic resin may be a water-based acrylic polymer resin. The aqueous acrylic resin may include acrylamide repeat units. The aqueous acrylic resin may include N-methylol acrylamide repeat units. The aqueous acrylic resin may be a water-based acrylic polymer resin and may contain N-methylol acrylamide repeat units such as, for example, EDOLAN^{®} AM available from Tanatex Chemicals B.V., Ede, Netherlands. The aqueous acrylic resin may be an acrylic copolymer comprising styrene in different amounts. The aqueous acrylic resin may be an acrylic copolymer comprising acrylamide monomers in different amounts. The aqueous acrylic resin may further comprise acrylonitrile, vinyl acetates, styrene or a combination thereof.

The aqueous acrylic resin may be a thermoplastic. The aqueous acrylic resin may be self-crosslinked. The acrylic polymer may be a crosslinkable acrylic polymer. The term "self-crosslinking" means that the aqueous acrylic resin comprises functional groups that can react with one another under certain conditions, for example, elevated temperature, hydrolysis conditions, etc., as is known in the art, to form a crosslinked polymer. In some aspects, the self-crosslinking can start cross-linking by applying an elevated temperature of, for example, about 120°C or higher without any additional chemicals. The aqueous acrylic resin may comprise a cross-linker. The aqueous acrylic resin may be uncrosslinked. The aqueous acrylic resin may be self-crosslinked and may further comprise a cross-linker. An additional cross-linker may improve the bonding to textiles. The heat reactive composition may comprise a crosslinker in order to form a crosslinked aqueous acrylic resin.

The heat reactive composition may comprise or consist essentially of an aqueous acrylic resin, expandable graphite, at least one FR additive, at least one polyhydroxy compound and a crosslinking agent. Suitable crosslinking agents may include, for example, one or more of: polyisocyanate based crosslinking agents, blocked polyisocyanate based crosslinking agents. Other suitable crosslinking agents are the following materials: N-methoxymethylmelamine, methylolmelamine, carbodiimide, polycarbodiimide, isocyanate, polyisocyanate, diaminocarbamate, propylenimine crosslinker depending on their chemical construction, propylenimine, aliphatic propylenimine, aromatic propylenimine deritatives, reaction products between polyfunctional acrylates and propylenimine, (cyclo)aliphatic bisamide crosslinker or a combination thereof.

The heat reactive composition may comprise a crosslinking agent at equal to or less than about 10% by weight, or equal to or less than about 9% by weight, or equal to or less than about 8% by weight, or equal to or less than about 7% by weight, or equal to or less than about 6% by weight, or equal to or less than about 5% by weight, or equal to or less than about 4% by weight, or equal to or less than about 3% by weight, or equal to or less than about 2% by weight, or equal to or less than about 1% by weight, based on the total weight of the aqueous acrylic resin and the crosslinking agent.

Aqueous acrylic resins having a melt or softening temperature of less than about 280°C may be used. The aqueous acrylic resins may allow expandable graphite to expand at least about 900 micrometers upon heating to about 280°C, as measured in the TMA expansion test.

Suitable aqueous acrylic resins in the heat reactive material may allow the expandable graphite to expand at temperatures below the pyrolysis temperature of the meltable layer. The viscoelastic properties of the aqueous acrylic resin during exposure to heat may allow the expansion of expandable graphite and maintain the structural integrity of the heat reactive material after expansion of the expandable graphite.

The heat reactive material may not include silicone or silicone containing compounds. The heat reactive material may be free from or essentially free from silicone. As used herein, "essentially free from silicone" means that the heat reactive material may comprise equal or less than about 5% by weight of silicone containing compounds, or equal or less than about 4% or equal or less than about 3% or equal or less than about 2%, or equal or less than about 1% by weight of silicone containing compounds. All percentages by weight are based on the total weight of the heat reactive material.

One benefit of the use of aqueous acrylic resins in the heat reactive material, is that the textile composite may have a reduced print through when compared with, for example, textile composites formed with silicone-based heat reactive materials. This reduced print through may result in improved visual optics and color durability for, for example, camouflage printing. Furthermore, composite textiles formed with aqueous acrylic resin-based heat reactive materials may provide better conditions for post treatments such as, for example, water repellent treatments, because the acrylic chemistry reacts better with such treatments when compared to hydrophobic silicones.

The heat reactive material may be free from or essentially free from glass fibers. It is known to use glass fibers in combination with compounds containing phosphorous to form a relatively hard and stable char after the pyrolysis of a polymer resin. It is not necessary to use glass fibers to help to stabilize a char formed by the heat reactive material described herein. As used herein, "essentially free from glass fibers" means that the heat reactive material may comprise equal or less than about 5% by weight of glass fibers, or equal or less than about 4% or equal or less than about 3% or equal or less than about 2%, or equal or less than about 1% by weight of glass fibers. All percentages by weight are based on the total weight of the heat reactive material.

The polymer resin comprising aqueous acrylic resin may contain and/or function as an adhesive, for example, to laminate or attach the meltable layer to the additional layer.

The expandable graphite may expand by at least about 400 microns in the TMA Expansion Test described herein when heated to about 240°C. The expandable graphite may expand by at least about 500 microns in the TMA Expansion Test described herein when heated to about 240°C. The expandable graphite may expand by at least about 600 microns in the TMA Expansion Test described herein when heated to about 240°C. The expandable graphite may expand by at least about 700 microns in the TMA Expansion Test described herein when heated to about 240°C. The expandable graphite may expand by at least about 800 microns in the TMA Expansion Test described herein when heated to about 240°C. The expandable graphite may expand by at least about 900 microns in the TMA Expansion Test described herein when heated to about 280°C.

The expandable graphite may have an endotherm greater than or equal to about 50 Joules/gram (J/g), or greater than or equal to about 75J/g, or greater than or equal to about 100J/g, or greater than or equal to about 125J/g, or greater than or equal to about 150J/g, or greater than or equal to about 175J/g, or greater than or equal to about 200J/g, or greater than or equal to about 225J/g, or greater than or equal to about 250J/g. Differential Scanning Calorimetry (DSC) can be used to determine the endothermic values of the expandable graphite materials.

The expandable graphite can also have both a good expansion, as described above, and an endotherm of at least about 100 J/g, when tested according to the DSC Endotherm test method as described herein. The expandable graphite may have an expansion of greater than about 900 µm at about 280°C when measured in the TMA Expansion Test described herein and an endotherm greater than or equal to about 100 J/g when tested according to the DSC Endotherm test method as described herein.

The size of the expandable graphite particles incorporated into the heat reactive material may be chosen so that the heat reactive material may be applied with a selected application method. For example, where the heat reactive material is applied by gravure printing or by screen printing techniques, the expandable graphite particle size may be small enough to fit in the gravure cells or the screen printing or spray nozzles (carpet print) apertures. The expandable graphite may be Asbury 3626 expandable graphite available from Asbury Carbons, Asbury, New Jersey, USA.

The heat reactive material may also include at least one flame retardant (FR) additive. The heat reactive material may include one or more flame retardant (FR) additives selected from: melamine, polyphosphate, or a combination thereof. The FR additive may be melamine polyphosphate. The heat reactive material may include at least one of AFLAMMIT^{®} PMN 500 melamine, AFLAMMIT^{®} PMN 200 melamine polyphosphate and AFLAMMIT^{®} PCO 962 additives, all available from Thor GmbH, Speyer, Germany.

The heat reactive material may also include at least one polyhydroxy compound. The polyhydroxy compound may have a molecular weight of less than about 1000 g/mol, of less than about 500 g/mol, of less than about 250 g/mol, or of less than about 100 g/mol. For example, in some embodiments, the polyhydroxy compound may be propane-1,2,3-triol. In some embodiments, the polyhydroxy compound may be propane-1,2,3-triol, butane-1,2,3,4-tetrol (erythritol), 2,2-(bishydroxymethyl)propane-1,3-diol (pentaerythritol), ethylene glycol, propylene glycol, diethylene glycol, triethylene glycol, neopentyl glycol or a combination thereof.

The heat reactive composition may comprise from about 50 to about 90 weight percent (wt%) aqueous acrylic resin, or from about 50 to about 80 wt% aqueous acrylic resin, or from about 50 to about 76 wt% aqueous acrylic resin, or from about 60 to about 80 wt% aqueous acrylic resin, or from about 55 to about 90 wt% aqueous acrylic resin, or it includes from about 55 to about 85 wt% aqueous acrylic resin, or from about 55 to about 80 wt% aqueous acrylic resin, or from about 55 to about 76 wt% aqueous acrylic resin, or from about 60 to 90 wt% aqueous acrylic resin, or from about 60 to about 85 wt% aqueous acrylic resin, or from about 60 to about 80 wt% aqueous acrylic resin, or from about 60 to about 76 wt% aqueous acrylic resin. All percentages by weight are based on the total weight of the heat reactive composition.

Based on the total weight of the heat reactive composition, the heat reactive composition may contain expandable graphite in a range of from about 5 to about 45 percent by weight (wt%), wherein the percentage by weight is based on the total weight of the heat reactive composition. The expandable graphite may be present in the heat reactive composition in the range of from about 5 to about 40 wt%, or from about 5 to about 35 wt%, or from about 5 to about 30 wt%, or from about 5 to 25 wt%, or from about 10 to 45 wt%, or from about 10 to 40 wt%, or from about 10 to about 35 wt%, or from about 10 to about 30 wt%, or from about 10 to about 25 wt%, wherein the percentages by weight are based on the total weight of the wet heat reactive composition.

Based on the total weight of the heat reactive composition, the heat reactive composition may contain at least one FR additive in a range of from about 5 to about 45 percent by weight (wt%), or in the range of from about 5 to about 40 wt%. The at least one FR additive may be present in the heat reactive composition in the range of from about 5 to about 35 wt%, or from about 5 to about 30 wt%, or from about 5 to about 25 wt%, or from about 10 to about 45 wt%, or from about 10 to about 40 wt%, or from about 10 to about 35 wt%, or from about 10 to about 30 wt%, or from about 10 to about 25 wt%, wherein the percentages by weight are based on the total weight of the heat reactive composition.

Based on the total weight of the heat reactive composition, the heat reactive composition may contain at least one polyhydroxy compound in a range of from about 3 to about 10 wt%, or from about 3 to about 8 wt%, or from about 3 to about 7 wt%.

A mixture of expandable graphite and at least one FR additive may be present in the heat reactive composition in the range of from about 5 to about 45 wt% of expandable graphite and from about 5 to about 45 wt% of FR additive, based on a total weight of the heat reactive composition. The mixture of expandable graphite and at least one FR additive may be present in the heat reactive composition in the range of from about 10 to about 40 wt% of expandable graphite and from about 10 to about 40 wt% of FR additive, or in the range of from about 10 to about 30 wt% of expandable graphite and from about 10 to about 25 wt% of FR additive, wherein all percentages by weight are based on the total weight of the heat reactive composition.

The heat reactive composition may include from about 50 to about 90 wt% of aqueous acrylic resin and from about 10 to about 50 wt% of a mixture of the expandable graphite and the FR additive, based on the total weight of the heat reactive composition. The heat reactive composition may include from about 50 to about 80 wt% of aqueous acrylic resin and from about 20 to about 50 wt% of a mixture of the expandable graphite and the FR additive, based on the total weight of the heat reactive composition. The heat reactive composition may include from about 50 to about 75 wt% of aqueous acrylic resin and from about 25 to about 50 wt% of a mixture of the expandable graphite and the FR additive, based on the total weight of the heat reactive composition. The heat reactive composition may include from about 50 to about 70 wt% aqueous acrylic resin, from about 5 to about 15 wt% expandable graphite, from about 5 to about 15 wt% FR additive, and from about 3 to about 10 wt% polyhydroxy compound, based on the total weight of the heat reactive composition.

The heat reactive composition may include from about 50 to about 80 wt% aqueous acrylic resin, from about 5 to about 15 wt% expandable graphite; from about 5 to about 15 wt% flame retardant additive, from about 5 to about 20 wt% the polyhydroxy compound, and from about 5 to about 50 wt% water, based on the total weight of the heat reactive composition.

The heat reactive composition may comprise additional additives such as pigments, fillers, antimicrobials, processing aids, crosslinking agents, thickeners, emulsifiers, defoamers and stabilizers. The heat reactive composition may contain equal or less than about 10% by weight, or equal or less than about 5% wt, or equal or less than about 4% wt, or equal or less than about 3% wt, or equal or less than about 2% wt, or equal or less than about 1% wt of any of the optional additives. In some embodiments, the heat reactive composition may not contain an emulsifier. All weight percentages are based on the total weight of the heat reactive composition.

The heat reactive composition may be produced by a method that provides an intimate blend of the polymer resin comprising aqueous acrylic resin, the expandable graphite, the FR additive and the polyhydroxy compound, without causing substantial expansion of the expandable graphite. The aqueous acrylic resin may be a water-based acrylic polymer. The expandable graphite, the FR additive, and polyhydroxy compound and any optional additive, for example, crosslinking agents, may be mixed or blended with the aqueous acrylic resin separately or concurrently with one another to form the heat reactive composition. Mixing methods include but are not limited to paddle mixer, blending and other low shear mixing techniques. The intimate blend of aqueous acrylic resin, expandable graphite particles, the FR additive, and the polyhydroxy compound may be achieved by mixing the expandable graphite, the FR additive and the polyhydroxy compound with a monomer mixture and/or prepolymer prior to polymerization of the aqueous acrylic resin. The monomer mixture and or prepolymers may then be polymerized to produce the heat reactive composition. In methods which provide an intimate blend of the aqueous acrylic resin, FR additive, polyhydroxy compound and the expandable graphite particles or agglomerates of expandable graphite, the expandable graphite may be coated or encapsulated by the aqueous acrylic resin prior to expansion of the graphite.

The heat reactive composition can be applied as a continuous layer.

The heat reactive composition may be applied as a discontinuous layer. A discontinuous layer of heat reactive composition may have less than 100% surface coverage. Applying the heat reactive composition as a discontinuous layer may enhance air-permeability, water vapor permeability and/or hand.

The discontinuous pattern of heat reactive composition may comprise any suitable shape or form. For example, the pattern may comprise one or more of dots, shapes, circles, squares, triangles, stars, diamonds, pentagons, hexagons, heptagons, octagons, polygons, ovals, grids, lines, waves, zig-zag lines and the like. A discontinuous application of the heat reactive material may provide less than 100% surface coverage by forms including but not limited to dots, grids, lines, and combinations thereof. As used herein, the term "dot" means any shape that may be any discrete shape, for example, one or more of a circle, a square, a rectangle, a triangle, a diamond, a pentagon, a hexagon, a heptagon, an octagon, an oval, a polygon, a star, a heart and the like. The lines may have a straight shape, a corrugated shape, a curved shape or mixtures thereof. Depending on the pattern, the dots and lines may be arranged closer or wider to each other. The lines may be arranged in the form of a grid.

Where the average distance between adjacent areas of discontinuous pattern may be equal or less than about 10 millimeters (mm), or equal or less than about 9 mm, or equal or less than about 8 mm, or equal or less than about 7 mm, or equal or less than about 6 mm, or equal or less than about 5 mm, or equal or less than about 4 mm, or equal or less than about 3.5 mm, or equal or less than about 3 mm, or equal or less than about 2.5 mm or equal or less than about 2 mm, or equal or less than about 1.5 mm, or equal or less than about 1 mm, or equal or less than about 0.5 mm, or equal or less than about 0.4 mm, or equal or less than about 0.3 mm, or equal or less than about 0.2 mm. An average distance between adjacent areas of the discontinuous pattern may be equal or greater than about 40 microns, or equal or greater than about 50 microns, or equal or greater than about 100 microns, or equal or greater than about 200 microns, depending on the application. Average dot spacing measured to be equal or greater than about 200 microns and equal or less than about 500 microns is useful in some patterns described herein. As used herein, "the average distance between adjacent areas" means the distance between the edges of adjacent dots.

Pitch may be used, for example, in combination with surface coverage as a way to describe the laydown of a printed pattern. In general, pitch is defined as the average center-to-center distances between adjacent forms such as dots, lines, or gridlines of the printed pattern. The average is used, for example, to account for irregularly spaced printed patterns. The heat reactive composition may be applied discontinuously in a pattern with a pitch and surface coverage that provides superior flame retardant performance compared to a continuous application of heat reactive composition having a laydown of equivalent weight of the heat reactive composition. The pitch may be defined as the average of the center-to-center distances between adjacent shapes of the heat reactive composition. For example, the pitch may be defined as the average of the center-to-center distances between adjacent dots or grid lines of the heat reactive composition. The pitch may be equal or greater than about 500 microns, equal or greater than about 600 microns, equal or greater than about 700 microns, equal or greater than about 800 microns, equal or greater than about 900 microns, equal or greater than about 1000 microns, equal or greater than about 1200 microns, equal or greater than about 1500 microns, equal or greater than about 1700 microns, equal or greater than about 1800 microns, equal or greater than about 2000 microns, equal or greater than about 3000 microns, equal or greater than about 4000 microns, or equal or greater than about 5000 microns, or equal or greater than about 6000 microns or any value therebetween. A preferred pattern of heat reactive composition may have pitch from about 500 microns to about 6000 microns.

In embodiments where properties such as hand, breathability, and/or textile weight are important, a surface coverage of equal or greater than about 25%, and equal or less than about 90%, or less than about 80%, or less than about 70%, or less than about 60%, or less than about 50%, or less than about 40%, or less than about 30% may be used. Upon exposure to heat, the meltable layer may be exposed to enough energy to combust. In certain embodiments and where greater flame resistant properties are needed, it may be desired to have a surface coverage from about 30% to about 100% of the heat reactive material on a surface of the inner textile or middle layers. Where greater flame resistant properties are needed, it may be desired to have a surface coverage of the heat reactive material with pitch from about 500 microns to about 6000 microns. For example, the surface coverage of the heat reactive material may be from about 30% to about 80% of the heat reactive material on a surface of the inner textile or middle layer with pitch from about 500 microns to about 6000 microns.

The heat reactive composition may be applied in a discontinuous dot pattern. The dots may have a diameter in the range of greater than or equal to from about 0.8 mm to about 5 mm. The dots may have a diameter in the range of from about 0.9 mm to about 4.5 mm. The dots have a diameter in the range of from about 1.0 mm to about 4.0 mm. The dots may have a diameter in the range of from about 1.0 mm to about 3.5 mm. The dots may have a diameter in the range of from about 1.0 to about 3.0 mm. The dots may have a diameter in the range of from about 1.0 mm to about 2.5 mm. The dots may have a diameter in the range of from about 1.0 mm to about 2.25 mm. The dots may have a diameter in the range of from about 1.0 mm to about 2.2 mm. The dots may have a diameter in the range of from about 1.0 mm to about 2.1 mm. The dots may have a diameter in the range of from about 1.0 mm to about 2.0 mm.

The heat reactive material may cover in the range of from greater than or equal to about 20% to about 100% of the surface area of the meltable layer and/or the additional layer. The heat reactive material may cover in the range of from about 25% to about 80% of the surface area of the meltable layer and/or the additional layer. The heat reactive material may cover in the range of from about 25% to about 75% of the surface area of the meltable layer and/or the additional layer. The heat reactive material may cover in the range of from about 25% to about 55% of the surface area of the meltable layer and/or the additional layer. The heat reactive material may cover in the range of from about 25% to about 40% of the surface area of the meltable layer and/or the additional layer. The heat reactive material may cover in the range of from about 25% to about 35% of the surface area of the meltable layer and/or the additional layer.

The heat reactive material may cover in the range of from about 30% to about 100% of the surface area of the meltable layer and/or the additional layer. The heat reactive material may cover in the range of from about 45% to about 100% of the surface area of the meltable layer and/or the additional layer. The heat reactive material may cover in the range of from about 55% to about 100% of the surface area of the meltable layer. The heat reactive material may cover in the range of from about 65% to about 100% of the surface area of the meltable layer. The heat reactive material may cover in the range of from about 70% to about 100% of the surface area of the meltable layer and/or the additional layer. The heat reactive material may cover in the range of from about 95% to about 100% of the surface area of the meltable layer and/or the additional layer.

The heat reactive material may cover in the range of from about 30% to about 70% of the surface area of the meltable layer and/or the additional layer. The heat reactive material may cover in the range of from about 45% to about 65% of the surface area of the meltable layer and/or the additional layer. The heat reactive material may cover in the range of from about 25% to about 50% of the surface area of the meltable layer and/or the additional layer. The heat reactive material may cover in the range of from about 65% to about 90% of the surface area of the meltable layer. The heat reactive material may cover in the range of from about 70% to about 80% of the surface area of the meltable layer and/or the additional layer.

These ranges of coverage of the layers with heat reactive material of less than 100% may improve properties of the textile composite such as air-permeability, hand, breathability, and/or textile weight. For example, applying the heat reactive material to the meltable layer and/or the additional layer in a deposition from about 20% to about 95% may result in a textile composite with increased air-permeability, breathability, increased hand and decreased weight compared to a textile composite in which the heat reactive material is applied as a continuous layer with 100 % coverage of the meltable and/or additional layer.

Methods for achieving a coverage of less than 100% may comprise applying or printing the heat reactive composition onto a surface of the meltable layer or the additional layer or both. Suitable application, printing or deposition methods for the heat reactive composition include, but are not limited to, screen printing, rotary screen printing, gravure printing, spray or scatter coating, or knife coating. Screen printing or rotary screen printing of the heat reactive material may allow for a higher laydown (when compared to the laydown that can be achieved by a gravure roll) and a low percent area coverage which can allow for a relatively high air permeability of the textile composite. Using this method, the thickness of the screens may be increased because the heat reactive composition may include water. However, after printing, at least a portion of the water may be removed (e.g., evaporated) from the heat reactive composition using a heat source, for example, an oven or a heated roll. When water is removed from the heat reactive composition during heating, the mass of the heat reactive material may be reduced, resulting in a lighter textile composite. When at least a portion of the water of the heat reactive composition is removed, the mass of the heat reactive material may be reduced as much as about 20% or as much as about 25% or as much as about 30% or as much as about 35% or as much as about 40% or as much as 45%, when compared to the mass of the heat reactive composition prior to removal of the water.

Upon exposure of the textile composite to flames and/or heat, for example, a temperature greater than or equal to about 280°C, the meltable layer may begin to melt and the melt may mix with the heat reactive material, especially with the expanding graphite. This process can also form a char comprised of the meltable layer and the heat reactive material. The char resulting from exposure of the meltable layer and the heat reactive material to heat and/or high temperatures, for example, greater than or equal to about 280°C, may be a heterogeneous melt mixture comprising at least the meltable layer and the expanded expandable graphite. A char, according to this disclosure, is meant to refer to the carbonaceous material remaining after exposing the meltable layer and the heat reactive material to a temperature of greater than or equal to about 280°C. At temperatures greater than or equal to about 280°C, one or both of the meltable layer and the aqueous acrylic resin may also oxidize or participate in the combustion process forming additional carbonaceous material that becomes part of the char. The formation of the char can help to insulate the layers below of the char from exposure to heat.

The heat reactive material, upon expansion, may form a plurality of tendrils comprising expanded graphite. During the expansion process, the total volume of the heat reactive material may increase significantly when compared to the same mixture prior to expansion. The volume of the heat reactive material may be increased at least about five times after expansion. The volume of the heat reactive material may be increased at least about six times after expansion. The volume of the heat reactive material may be increased at least about seven times after expansion. The volume of the heat reactive material may be increased at least about eight times after expansion. The volume of the heat reactive material may be increased at least about nine times after expansion. The volume of the heat reactive material may be increased at least about ten times after expansion.

Where the textile composite comprises a meltable layer, an additional layer and heat reactive material applied in a pattern of discontinuous forms, the heat reactive material may expand forming tendrils that are loosely packed after expansion creating voids between the tendrils, as well as space between the pattern of the expanded heat reactive material. Upon exposure to flame, the meltable layer may melt and generally move away from the open areas between the discontinuous forms of the heat reactive material. The additional layer may support the heat reactive material during expansion and the melt of the meltable layer may be absorbed and retained by the expanding heat reactive material during melting. By absorbing and retaining the melt, the textile composites described herein may exhibit no melt-dripping. By absorbing and retaining the melt, the textile composites described herein may be non-flammable, as measured by the Horizontal Flame Test described herein. Where the thermally stable additional layer supports the expanding heat reactive material during melt absorption, the thermally stable additional layer may be protected from breaking open and hole formation. The increased surface area of the heat reactive material upon expansion may allow for absorption of the melt from the meltable layer by the expanded heat reactive material upon exposure to flame.

The textile composite described herein may exhibit enhanced properties due to the combination of the meltable layer, the heat reactive material comprising the aqueous acrylic resin, expandable graphite and FR additive, and the additional layer. For example, the textile composite may have an afterflame of equal or less than about 2 seconds when tested for flame resistance according using the Horizontal Flame Test, described herein. Furthermore, in some embodiments, the textile composite may exhibit no melt drip, no hole formation and no spreading of the flame or glow to the edges thereof.

Because the heat reactive composition comprises an aqueous acrylic resin in which water may be subsequently removed, the textile composite may have a dry peel strength in the range of from about 5 to about 30 Newtons (N). The textile composite may have a dry peel strength in the range of from about 6 to about 30 N. The textile composite may have a dry peel strength in the range of from about 7 to about 30 N. The textile composite may have a dry peel strength in the range of from about 7 to about 24 N. The textile composite may have a dry peel strength in the range of from about 7 to about 23 N. The textile composite may have a dry peel strength in the range of from about 7 to about 22 N. The textile composite may have a dry peel strength in the range of from about 7 to about 21 N. The textile composite may have a dry peel strength in the range of from about 8 to about 22 N. The textile composite may have a dry peel strength in the range of from about 8 to about 23 N. The textile composite may have a dry peel strength in the range of from about 8 to about 24 N. The textile composite may have a dry peel strength in the range of from about 8 to about 25 N. The dry peel strength values are as measured in DIN 54310.

The additional layer may be made of thermally stable materials. Upon flame exposure, the meltable layer may melt towards the heat reactive material. As the expandable graphite in the heat reactive material expands, the thermally stable additional layer may hold the expanding heat reactive material in place to facilitate the absorption of melt of the meltable layer.

The additional layer may be a textile layer, a thermally stable textile layer, or a combination thereof. As disclosed above, textiles can be woven, knit, nonwoven textiles or multilayer combinations thereof. Examples of thermally stable textiles include, but are not limited to, an aramid, flame resistant cotton, cotton, flax, cupro, acetate, triacetate, wool, viscose, polybenzimidazole (PBI), polybenzoxazole (PBO), FR rayon, modacryl, modacryl/cotton blend, polyamine, fiberglass, polyacrylonitrile, polytetrafluoroethylene or a combination thereof.

The additional layer may be a meltable layer. The meltable additional layer may be a meltable textile comprising one or more of: a woven, a knit, a non-woven material, or a combination thereof. The additional layer may be a meltable multilayer textile comprising one or more of wovens, knits and/or nonwoven textiles. The textile used for the meltable additional layer may comprise one or more of: polyamides, for example nylon, nylon 6, nylon 6.6; polyester, polyethylene terephthalate, polytrimethylene terephthalate, polybutylene terephthalate; polyurethane; polyolefin, polyethylene, polypropylene, elastane. The meltable additional layer may be a polyamide or a polyester. The meltable additional layer may be a blend or a combination of polyamides, for example nylon, nylon 6, nylon 6.6; polyester, polyethylene terephthalate, polytrimethylene terephthalate, polybutylene terephthalate; polyurethane; polyolefin, polyethylene, polypropylene and/or elastane.

The meltable additional layer may comprise more than one meltable textile. For example, the meltable additional layer may comprise a combination of two or more of nylon, nylon 6, nylon 6.6, polyester, polyethylene terephthalate, polytrimethylene terephthalate, polybutylene terephthalate, polyurethane, polyolefin, polyethylene, elastane, and polypropylene.

The additional layer may be a non-meltable textile, such as cotton. The additional layer may be a non-meltable textile comprising meltable fibers. For example, the additional layer may be a textile comprising cotton and polyethyleneterephtalate (PET). The additional layer may be a textile comprising cotton and polyamide (PA). The additional layer may be a textile comprising PET and viscose.

The additional layer may be a meltable film wherein the meltable film can be a microporous or a nonporous film. The meltable film can be a nonporous and gas impermeable film and may be a meltable continuous film that covers, for example, all or part of an article or garment. The meltable continuous film may not allow chemicals or biological materials to penetrate from the surface of the composite article to the wearer. The meltable film may be a single film layer or a multilayer film. In a flame resistant composite article, the meltable film may be a microporous polyolefin, a microporous polyester, or a microporous polyurethane.

The meltable film may comprise polyolefin, polyethylene, polypropylene, ethyl vinyl alcohol (EVOH), ethyl vinyl acetate (EVAc), polyvinyl chloride (PVC), polyvinylidene chloride (PVdC), polyvinyl fluoride, polyvinylidene fluoride, fluoropolymers, polyurethane, polyesters, polyamides, polyethers, polyacrylates and polymethacrylates, copolyetheresters, or copolymers or multilayer laminates thereof.

The textile composite may be used in garments for workers in hazardous environments. The textile composite may present one or more of the following properties: breathable, waterproof, flame resistant, lightweight, flexible, and comfortable to wear.

The textile composite may have a weight in the range of from about 80 to about 240 grams per square meter (g/m²). The textile composite may have a weight in the range of from about 80 to about 200 g/m². The textile composite may have a weight in the range of from about 80 to about 180 g/m². The textile composite may have a weight in the range of from about 80 to about 165 g/m². The textile composite may have a weight in the range of from about 80 to about 150 g/m². The textile composite may have a weight in the range of from about 80 to about 125 g/m². The textile composite may have a weight in the range of from about 80 to about 100 g/m². The textile composite may have a weight in the range of from about 80 to about 90 g/m².

The textile composite may have a weight in the range of from about 95 to about 240 g/m². The textile composite may have a weight in the range of from about 110 to about 240 g/m². The textile composite may have a weight in the range of from about 125 to about 240 g/m². The textile composite may have a weight in the range of from about 140 to about 240 g/m². The textile composite may have a weight in the range of from about 165 to about 240 g/m². The textile composite may have a weight in the range of from about 180 to about 240 g/m².

The textile composite may have a weight in the range of about 115 to about 160 g/m². The textile composite may have weight in the range of from about 95 to about 150 g/m². The textile composite may have a weight in the range of from about 165 to about 190 g/m². The textile composite may have a weight in the range of from about 135 to about 175 g/m². The textile composite may have a weight in the range of from about 85 to about 100 g/m². All weight measurements are performed by DIN EN 12127 (1997/12).

The additional layer may be disposed on the heat reactive material so that the heat reactive material is disposed between the meltable layer and the additional layer. The additional layer may be attached or bonded by the heat reactive material, to the inner side of the meltable layer of the textile composite. In use, the outer side of the meltable layer may be oriented to come in contact with flame or heat source.

The combined meltable layer, heat reactive material and additional layer may be bonded or adhered by pressure. For example, pressure between the nip of two rollers may be applied to the combined meltable layer, heat reactive material and additional layer.

The combined meltable layer, heat reactive material and additional layer may be dried and cured by the application of heat. The temperature should be sufficiently high to evaporate most of the water of the aqueous acrylic resin and at least a portion of any volatile compounds that might be present, but should be low enough so that the expandable graphite does not begin to expand. The heating temperature may be between 60°C and 180°C. The heating temperature to evaporate most of the water of the aqueous acrylic resin may be between about 80 to about 100°C. The heating step may be performed via one or more heated rolls, wherein the heated roll(s) can serve to provide heat in order to drive off the water and/or volatile compounds and optionally to cure or crosslink the aqueous acrylic resin and to provide pressure in order to create a better bond between the meltable layer and the additional layer.

The method may further comprise the step of applying pressure to the textile composite to form a laminate.

The heat reactive material may comprise an aqueous acrylic resin. Without wishing to be bound by theory, the use of an aqueous acrylic resin as a polymer resin may reduce the overall weight of the textile composite after the heating step where at least a portion of the water is removed. However, the reduced amount of heat reactive material may limit the strengths of the textile composite. The solution is an improved mixture of the heat reactive material components, in particular an added polyhydroxy compound while decreasing the amount of FR additives and the amount of the expandable graphite. The added benefit is an improved flame resistance (char performance) and improved processability. Typically, a char is a relatively lightweight crust formed after the textile composite has been exposed to a heat or flame source, i.e., after pyrolysis of the meltable layer and expansion of the expandable graphite and can act as an insulation layer, shielding the wearer from at least a portion of the heat. The char has very little structural integrity and can easily fall off the textile composite when the textile is flexed or moved. It has surprisingly found that the addition of a polyhydroxy compound, typically thought of as a fuel source for a flame, to the heat reactive material results in a char that has a relatively higher structural integrity when compared to the same heat reactive composition without the polyhydroxy compound. Improved structural integrity of the char allows the char to stay on the garment, allowing a wearer more time to escape the heat and flame incident. In one embodiment, a textile composite with an afterflame of less than 2 seconds is described herein.

The textile composite may have an afterflame of equal or less than about 2 seconds when tested according to the DIN EN 15025A (April 2017) test standard. The textile composite may have an afterflame of equal or less than about 1.5 seconds when tested according to the DIN EN 15025A test standard. The textile composite may have an afterflame of equal or less than about 1 second when tested according to the DIN EN 15025A test standard. The textile composite may have an afterflame of equal or less than about 0.5 seconds when tested according to the DIN EN 15025A test standard. Upon exposure of an outer side of the meltable layer to a flame, the meltable layer provided with a layer of heat reactive material may have an afterflame of equal or less than about 2 seconds, when tested according to the DIN EN 15025A test standard. In use, the meltable layer may shrink away from flames.

Stretch may be incorporated into the textile composite which can increase the comfort of a garment comprising the textile composite. One-way stretch can be incorporated, for example, following the disclosure of WO 2018/067529, entitled "Stretchable laminates" filed in in the name of W.L. Gore & Associates, Inc. As used herein, one way stretch means that the textile composite has recoverable elasticity in one of the machine or transverse direction, but typically, not both. Other methods for incorporating stretch into textile composite, especially those that contain one or more layers that are not inherently elastic are known in the art. Suitable examples can include for example, the teachings of EP1852253, entitled "Stretch composite film and composite fabric and processes for production of them," in the name of W.L. Gore and Associates.

The textile composite may be used to produce a garment. When the textile composite used to produce a garment, the textile composite may be oriented so that the meltable layer is exposed to the exterior area of the garment and the additional layer is positioned opposite the meltable layer, i.e., the additional layer is oriented towards the wearer.

The textile composite provides excellent lightweight protective garments that can protect a wearer against burns. When the textile composite is exposed to flames, the textile composite may undergo structural changes in order to shield the wearer from injury. The meltable layer may melt while the heat reactive material expands, absorbing the heat energy and the melting textile, in order to keep the meltable layer from burning and dripping onto the wearer. The combination of the melting of the meltable layer and the expansion of the heat reactive material may allow for a lightweight textile composite that is able to provide excellent comfort to a wearer and still provide protection from burns.

It should be understood that further features disclosed in connection with each aspect or embodiment correspond to further features of each other aspect or embodiment of the invention. For example, the method may include such steps to make a laminate material in accordance with the first aspect and so may include any material preparation, coating, or fabrication methods disclosed in connection therewith. Moreover the invention extends to any laminate structure obtainable by the methods disclosed herein.

The foregoing Examples are just that, and should not be read to limit or otherwise narrow the scope of any of the inventive concepts otherwise provided by the instant disclosure. While multiple examples are disclosed, still other embodiments will become apparent to those skilled in the art from the following detailed description, which shows and describes illustrative examples. Accordingly, the drawings and detailed description are to be regarded as illustrative in nature rather than restrictive in nature.

### BRIEF DESCRIPTION OF THE DRAWINGS

The accompanying drawings are included to provide a further understanding of the disclosure and are incorporated in and constitute a part of this specification, illustrate embodiments, and together with the description serve to explain the principles of the disclosure.
FIG. 1 is a schematic illustration of a cross-sectional view of one embodiment of the textile composite described herein;
FIG. 2 is a schematic illustration of a cross-sectional view of another embodiment of a textile composite described herein;
FIG. 3 is a schematic illustration of a cross-sectional view of another embodiments of a textile composite described herein;
FIG. 4 is a schematic illustration of a heat reactive material applied in a grid pattern; and
FIG. 5 is a schematic illustration of a heat reactive material applied in a pattern of discrete dots.
FIG 6 is a schematic illustration of a jacket including a textile composite as described herein.

### DETAILED DESCRIPTION

### Definitions and Terminology

This disclosure is not meant to be read in a restrictive manner. For example, the terminology used in the application should be read broadly in the context of the meaning those in the field would attribute such terminology.

With respect to terminology of inexactitude, the terms "about" and "approximately" may be used, interchangeably, to refer to a measurement that includes the stated measurement and that also includes any measurements that are reasonably close to the stated measurement. Measurements that are reasonably close to the stated measurement deviate from the stated measurement by a reasonably small amount as understood and readily ascertained by individuals having ordinary skill in the relevant arts. Such deviations may be attributable to measurement error, differences in measurement and/or manufacturing equipment calibration, human error in reading and/or setting measurements, minor adjustments made to optimize performance and/or structural parameters in view of differences in measurements associated with other components, particular implementation scenarios, imprecise adjustment and/or manipulation of objects by a person or machine, and/or the like, for example. In the event it is determined that individuals having ordinary skill in the relevant arts would not readily ascertain values for such reasonably small differences, the terms "about" and "approximately" can be understood to mean plus or minus 10% of the stated value.

### Description of Various Embodiments

Persons skilled in the art will readily appreciate that various aspects of the present disclosure can be realized by any number of methods and apparatuses configured to perform the intended functions. It should also be noted that the accompanying drawing figures referred to herein are not necessarily drawn to scale, but may be exaggerated to illustrate various aspects of the present disclosure, and in that regard, the drawing figures should not be construed as limiting.

For purposes of this disclosure, the term "flame resistant" as used herein refers to a textile or textile composite that exhibits an afterflame of less than about 2 seconds when subjected to the DIN EN 15025A test standard.

For purposes of this disclosure, the term "flammable" as used herein refers to textiles that have an afterflame of greater than two seconds when tested according to the Horizontal Flame Test (DIN EN ISO 15025A) for Textiles, as presented herein.

For purposes of this disclosure, the term "laminate" as used herein refers to at least two individual layers, which are bonded via an adhesive or otherwise.

For purposes of this disclosure, the term "meltable" as used herein refers to a textile or textile composite that melts when tested according to the Melting and Thermal Stability Test, as presented herein.

For purposes of this disclosure, the term "non-flammable" as used herein refers to textiles that have an afterflame of less than or equal to two seconds when tested according to the Horizontal Flame Test (DIN EN ISO 15025A) for Textiles, as presented herein.

For purposes of this disclosure, the term "textile" as used herein refers to a fabric material made from fibers, filaments, yarns comprising fibers and/or filaments or a combination thereof. In particular, the term "textile" as used herein refers to a manufactured sheet-like structure (e.g., knitted, woven or nonwoven) comprised of fibers, filaments and/or yarns.

For purposes of this disclosure, the term "void" as used herein refers to the empty space/volume between tendrils of expanded graphite.

Textile composites having a meltable layer, a heat reactive material and an additional layer can be used as protective clothing. Protective clothing includes garments like jackets, trousers, shirts, vests, overalls, gloves, gaiters, hoods and shoes.

Protective clothing needs to be lightweight to be widely used, especially in cases where the danger of a flash fire is present but of a low probability. To reduce weight of the textile composite, the weight of the individual layer has to be reduced without losing protective properties or decreasing breathability.

As described herein a layer for which the weight can be reduced is the heat reactive material layer. The use of an aqueous acrylic resin as a polymer resin reduces the overall weight of the textile composite after the heating step where at least a portion of the water is removed. However, the reduced amount of heat reactive material may limit the strengths of the textile composite. Further, the heat reactive material may limit the process stability resulting in short production yardages.

The solution is an improved mixture of the heat reactive material components, in particular an added polyhydroxy compound while decreasing the amount of FR additives and the amount of the expandable graphite. The added benefit is an improved flame resistance (char performance), improved processability and better printability. In one embodiment, a textile composite with an afterflame of less than 2 seconds is described herein.

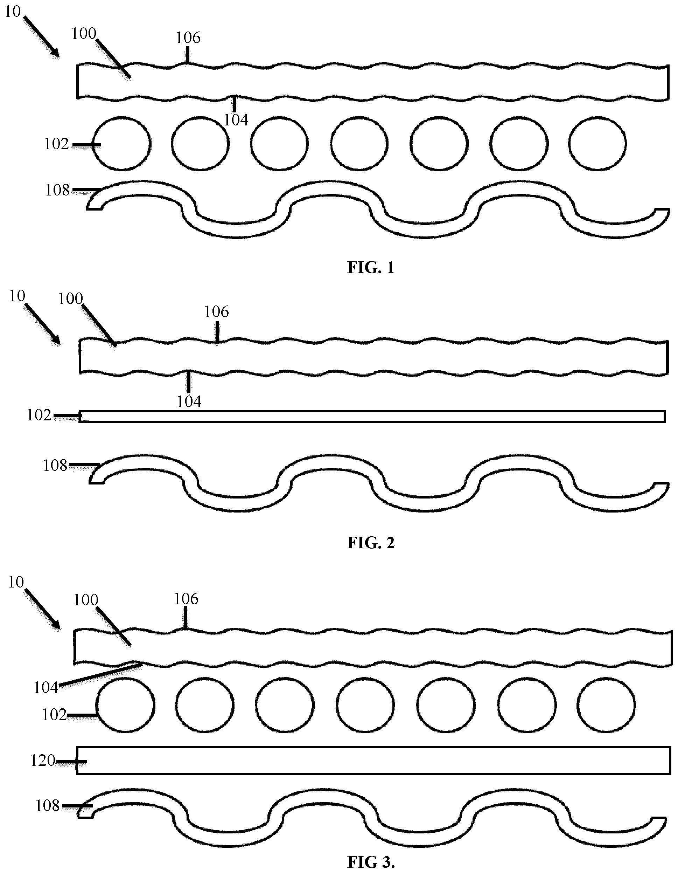

With reference to FIGS. 1-2, a textile composite 10 comprises a meltable layer 100; a heat reactive material 102 comprising an aqueous acrylic resin, expandable graphite, at least one flame retardant additives and at least one polyhydroxy compound; and an additional layer 108 disposed on or adjacent the heat reactive material 102. In one embodiment, the heat reactive material 102 is disposed on an inner side 104 of the meltable layer 100. Upon exposure of an outer side 106 of the meltable layer 100 to a flame, the textile composite has an afterflame of less than 2 seconds, when tested according to the DIN EN 15025A test standard.

FIG. 3 shows the textile composite of FIGS. 1-2 wherein the textile composite comprises a second additional layer 120. The second additional layer 120 can be a textile layer or a film layer.

The present disclosure relates to a textile composite comprising a) a meltable layer, b) a heat reactive material comprising a polymer resin comprising an aqueous acrylic resin, expandable graphite, at least one flame retardant (FR) additive and at least one polyhydroxy compound; and c) an additional layer disposed on the heat reactive material so that the heat reactive material is between the meltable layer and the additional layer; wherein the textile composite has an afterflame of less than 2 seconds. When the textile composite is used to produce a garment, the textile composite is oriented so that the meltable layer is exposed to the exterior area of the garment and the additional layer is positioned opposite the meltable layer, i.e., the additional layer is oriented towards the wearer. The disclosure also relates to embodiments wherein, when the meltable layer is exposed to a flame, the combination of the meltable layer and the heat reactive material form a char. In some embodiments, the char comprises a carbonaceous layer that forms after the meltable layer and polymer materials of the heat reactive materials have been burned. The carbonaceous char has a very high melt point and provides insulation for those materials beneath the char.

The textile composite comprises a meltable layer wherein the meltable layer can be a textile layer. The meltable layer can be a woven, a knit, a tricot knit, a non-woven material, a multilayer non-woven material or a combination thereof. Textiles which are suitable as the meltable layer can include, for example, polyamides, for example nylon, nylon 6, nylon 6.6; polyester, polyethylene terephthalate, polytrimethylene terephthalate, polybutylene terephthalate; polyurethane; polyolefin, polyethylene, polypropylene, elastane or a combination thereof. The disclosure also relates to any one of the previous embodiments, wherein the meltable layer is a polyamide or a polyester. In some embodiments, the meltable layer can be a single layer or two or more layers. In some embodiments, the meltable layer can be light weight. For example, the meltable layer according to any of the previous embodiments, can have a weight of equal or less than about 120 grams per square meter (g/m²), equal or less than about 110g/m², equal or less than about 100g/m², equal or less than about 90 g/m², equal or less than about 80g/m², equal or less than 70g/m², equal or less than 60g/m², equal or less than 50g/m², equal or less than about 45 g/m², equal or less than about 40g/m², equal or less than about 35 g/m², equal or less than about 30g/m², equal or less than about 25g/m², or equal or less than about 20 g/m². All weight measurements are performed by DIN EN 12127 (1997/12).

In some embodiments, the meltable layer 100 can comprise one or more of: a woven, a knit, a non-woven material, or a combination thereof. The meltable layer may be a multilayer textile comprising one or more of wovens, knits and/or nonwoven textiles. The textile used for the meltable layer may comprise one or more of: polyamides, for example nylon, nylon 6, nylon 6.6; polyester, polyethylene terephthalate, polytrimethylene terephthalate, polybutylene terephthalate; polyurethane; polyolefin, polyethylene, polypropylene, elastane or a combination thereof. The meltable layer may be a polyamide or a polyester. The meltable may be a blend or a combination of polyamides, for example nylon, nylon 6, nylon 6.6; polyester, polyethylene terephthalate, polytrimethylene terephthalate, polybutylene terephthalate; polyurethane; polyolefin, polyethylene, polypropylene and/or elastane. In some embodiments, the meltable layer 100 can be a meltable, non-flammable textile. Meltable, non-flammable textiles, include, for example, phosphonate modified polyesters (such as materials sold under the trade name TREVIRA^{®} CS and AVORA^{®} FR). Some meltable, non-flammable textiles are not typically intended for use in flame resistant laminates intended for garment applications because when constrained in traditional laminate form, the textile cannot readily shrink away from flames, resulting in continued burning. However, it has been found that when the textile composite further comprises the additional layer 108 and a heat reactive material 102 between the layers, the textile composites may be used in flame resistant laminate applications.

In some embodiments, the meltable layer 100 comprises more than one meltable textiles. For example, in some embodiments, the meltable layer 100 comprises a combination of two or more of nylon, nylon 6, nylon 6.6; polyester, polyethylene terephthalate, polytrimethylene terephthalate, polybutylene terephthalate; polyurethane; polyolefin, polyethylene, polypropylene, elastane. In still further embodiments, the meltable layer is a multilayered textile comprising two or more knits, woven or nonwovens. Each of the layers in the multilayered textile can be a meltable textile and the textiles are layered on top of each other. If a multilayered textile is used as the meltable outer layer, each individual meltable layer can be chosen independently of one another.

In some embodiments the meltable layer may include one or more treatments to improve the properties of the textile composite. For example, the meltable outer layer may have a hydrophobic treatment to help lower the water absorption of the textile composite. Suitable hydrophobic treatments can include, fluorochemical treatments and/or silicone-based treatments. The meltable outer layer may have an insecticidal or insect repellant treatment applied, for example, permethrin or DEET. In other embodiments, the meltable outer layer may include hydrophilic or oleophobic treatments in order to impart the desired water-wicking or dirt-repelling properties to the textile composite. Such treatments can be applied to the meltable outer layer prior to formation of the textile composite or can be applied after formation of the textile composite.

The textile composite also comprises a heat reactive material wherein the heat reactive material comprises or consists essentially of an aqueous acrylic resin, expandable graphite, a flame retardant (FR) additive and at least one polyhydroxy compound. As used in this context, "consists essentially of" means that the heat reactive material includes those materials listed and less than or equal to 10% (or less than or equal to 5% or less than or equal to 4% or less than or equal to 3% or less than or equal to 2% or less than or equal to 1%) by weight of any other material that may materially affect the composition. The percentages by weight are based on the total weight of the heat reactive material minus any volatiles that may be present, for example, water or other organic molecules that may evaporate during the drying and curing process.

In some embodiments, the acrylic polymer is an aqueous acrylic resin. In some embodiments, the aqueous acrylic resin includes acrylamide repeat units. In some embodiments, the aqueous acrylic resin includes N-methylol acrylamide repeat units. For example, in some embodiments, the aqueous acrylic resin is a water-based acrylic polymer resin and contains N-methylol acrylamide repeat units such as, for example, EDOLAN^{®} AM available from Tanatex Chemicals B.V., Ede, Netherlands.

The aqueous acrylic resin can be a thermoplastic - in one embodiment a self-crosslinkable aqueous acrylic resin and in another embodiment an uncrosslinked aqueous acrylic resin. In other embodiments, the heat reactive material further comprises a crosslinker in order to form a crosslinked aqueous acrylic resin. In other embodiments the heat reactive material comprises a self-crosslinked aqueous acrylic resin and a crosslinker. The additional crosslinker may help to improve the bonding to the meltable layer and the additional layer. Therefore, in some embodiments, the heat reactive material comprises or consists essentially of the aqueous acrylic resin, expandable graphite, at least one FR additive, at least one polyhydroxy compound and a crosslinking agent. Suitable crosslinking agents may include, for example, one or more of: polyisocyanate based crosslinking agents, blocked polyisocyanate based crosslinking agents. Other suitable crosslinking agents are the following materials: N-methoxymethylmelamine, methylolmelamine, carbodiimide, polycarbodiimide, isocyanate, polyisocyanate, diaminocarbamate, propylenimine crosslinker depending on their chemical construction, propylenimine, aliphatic propylenimine, aromatic propylenimine deritatives, reaction products between polyfunctional acrylates and propylenimine, (cyclo)aliphatic bisamide crosslinker or a combination thereof. If used, the crosslinking agents are typically used at less than or equal to about 10% by weight, based on the total weight of the aqueous acrylic resin and the crosslinking agent. In other embodiments, crosslinking agent is present at equal to or less about than 8% or equal to or less than about 6% or equal to or less than about 5% by weight, or equal to or less than about 4% by weight, or equal to or less than about 3% by weight, or equal to or less than about 2% by weight, or equal to or less than about 1% by weight wherein all percentages by weight are based on the total weight of the aqueous acrylic resin and the crosslinking agent.

Aqueous acrylic resins having a melt or softening temperature of less than 280°C may be used in disclosed embodiments. In some embodiments, the aqueous acrylic resins are deformable to allow the expandable graphite to expand substantially upon heat exposure at or below 300°C, or at or below 280°C. Suitable aqueous acrylic resins in the heat reactive material allow the expandable graphite to sufficiently expand at temperatures below the pyrolysis temperature of the meltable outer textile. In some embodiments, the viscoelastic properties of the aqueous acrylic resin during exposure to heat may allow the expansion of expandable graphite and maintain the structural integrity of the heat reactive material after expansion of the expandable graphite.

In some embodiments, the heat reactive material does not include silicone or silicon containing compounds. In other embodiments, the heat reactive material is free from or essentially free from silicone. As used herein, "essentially free from silicone" means that the heat reactive material comprises less than or equal to 5% by weight of silicone containing compounds, or less than or equal to 4% or less than or equal to 3% or less than or equal to 2% or less than or equal to 1% by weight of silicone containing compounds. All percentages by weight are based on the total weight of the heat reactive material.

The heat reactive material may be free from or essentially free from glass fibers. It is known to use glass fibers in combination with compounds containing phosphorous to form a relatively hard and stable char after the pyrolysis of a polymer resin. It is not necessary to use glass fibers to help to stabilize a char formed by the heat reactive material described herein. The polyhydroxy stabilize the char as glassfibers equally as the glass fibers. As used herein, "essentially free from glass fibers" means that the heat reactive material may comprise equal or less than about 5% by weight of glass fibers, or equal or less than about 4% or equal or less than about 3% or equal or less than about 2%, or equal or less than about 1% by weight of glass fibers. All percentages by weight are based on the total weight of the heat reactive material.

One benefit of the use of aqueous acrylic resins in the heat reactive material 102, is that the textile composite 10 has a reduced print through when compared with, for example, textile composites formed with silicone-based heat reactive materials. This reduced print through results in improved visual optics and color durability for, for example, camouflage printing. Furthermore, composite textiles 10 formed with aqueous acrylic resin-based heat reactive materials provide better conditions for post treatments such as, for example, water repellent treatments, because the acrylic chemistry reacts better with such treatments when compared to hydrophobic silicones. In embodiments, the aqueous acrylic resin may contain and/or function as an adhesive, for example, to laminate or attach the meltable layer to the additional layer.

The heat reactive material also comprises expandable graphite. In some embodiments, the expandable graphite expands by at least 900 micrometers when heated to about 280°C using the TMA expansion test described herein. Other useful grades of expandable graphite expand by at least 400 micrometers when heated to about 240°C.

The expandable graphite can also have both a good expansion, as described above, and an endotherm of at least 100 Joules/gram (J/g), when tested according to the DSC Endotherm test method as described herein. In other embodiments, it can be desirable to use expandable graphite with an endotherm of greater than or equal to 150 J/g or greater than or equal to 200 J/g or greater than or equal to 250 J/g. In some embodiments, suitable expandable graphite has an expansion of greater than 900 µm at 280°C and an endotherm greater than or equal to 100 J/g.

The size of the expandable graphite particles incorporated into the heat reactive material may be chosen so that the heat reactive material may be applied with the selected application method. For example, where the heat reactive material is applied by gravure printing or by screen printing techniques, the expandable graphite particle size should be small enough to fit in the gravure cells or the screen printing apertures. In some embodiments, the expandable graphite is Asbury 3626 expandable graphite available from Asbury Carbons, Asbury, New Jersey, USA.

As noted above, the heat reactive material 102 also includes at least one flame retardant (FR) additive. Exemplary FR additives that can be incorporated in the heat reactive material 102 include, but are not limited to, melamine, polyphosphate, or a combination thereof. In some embodiments, the FR additive is melamine polyphosphate. For example, in some embodiments, the heat reactive material 102 includes at least one of AFLAMMIT^{®} PMN 500 melamine, AFLAMMIT^{®} PMN 200 melamine polyphosphate and AFLAMMIT^{®} PCO 962 additives, all available from Thor GmbH, Speyer, Germany.

Further, the heat reactive material 102 also includes at least one polyhydroxy compound. The polyhydroxy compound may have a molecular weight of less than about 1000 g/mol, of less than about 500 g/mol, of less than about 250 g/mol, or of less than about 100 g/mol. For example, in some embodiments, the polyhydroxy compound may be propane-1,2,3-triol. In other embodiments, the polyhydroxy compound may be propane-1,2,3-triol, butane-1,2,3,4-tetrol (erythritol), 2,2-(bishydroxymethyl)propane-1,3-diol (pentaerythritol), ethylene glycol, propylene glycol, diethylene glycol, triethylene glycol, neopentyl glycol or a combination thereof.

In some embodiments, the heat reactive composition includes from about 50 to about 90 weight percent (wt%) of aqueous acrylic resin, based on the total weight of the heat reactive composition. In other embodiments, the heat reactive composition includes from about 50 to about 80 wt% aqueous acrylic resin, or from about 50 to about 76 wt% aqueous acrylic resin, or from about 60 to about 80 wt% aqueous acrylic resin, or from about 55 to about 90 wt% aqueous acrylic resin, or it includes from about 55 to about 85 wt% aqueous acrylic resin, or from about 55 to about 80 wt% aqueous acrylic resin, or from about 55 to about 76 wt% aqueous acrylic resin, or from about 60 to 90 wt% aqueous acrylic resin, or from about 60 to about 85 wt% aqueous acrylic resin, or from about 60 to about 80 wt% aqueous acrylic resin, or from about 60 to about 76 wt% aqueous acrylic resin. All percentages by weight are based on the total weight of the heat reactive composition.

Based on the total weight of the heat reactive composition, the heat reactive composition can comprise a mixture of expandable graphite and at least one FR additive in the range of from about 5 to about 45 wt% of expandable graphite and from about 5 to about 45 wt% of FR additive. The mixture of expandable graphite and at least one FR additive may be present in the heat reactive composition in the range of from about 10 to about 40 wt% of expandable graphite and from about 10 to about 40 wt% of FR additive, or in the range of from about 10 to about 30 wt% of expandable graphite and from about 10 to about 25 wt% of FR additive, wherein all percentages by weight are based on the total weight of the heat reactive composition.

Based on the total weight of the heat reactive composition, the heat reactive composition can comprise a polyhydroxy compound in a range of from about 3 to about 20 wt%, or from about 3 to about 10 wt%, or from about 3 to about 7 wt%.

In some embodiments, the heat reactive composition may include from about 50 to about 90 wt% of aqueous acrylic resin and from about 10 to about 50 wt% of a mixture of the expandable graphite, the FR additive and the polyhydroxy compound, based on the total weight of the heat reactive composition. The heat reactive composition may include from about 50 to about 80 wt% of aqueous acrylic resin and from about 20 to about 50 wt% of a mixture of the expandable graphite, the FR additive and the polyhydroxy compound, based on the total weight of the heat reactive composition. The heat reactive composition may include from about 50 to about 75 wt% of aqueous acrylic resin and from about 25 to about 50 wt% of a mixture of the expandable graphite, the FR additive and the polyhydroxy compound, based on the total weight of the heat reactive composition. The heat reactive composition may include from about 60 to about 80 wt% aqueous acrylic resin, from about 5 to about 10 wt% expandable graphite; from about 5 to about 10 wt% flame retardant additive, from about 5 to about 10 wt% the polyhydroxy compound, and from about 5 to about 10 wt% water, based on the total weight of the heat reactive composition.

In some embodiments, the heat reactive composition may comprise additional additives such as pigments, fillers, antimicrobials, processing aids, crosslinking agents, thickeners, emulsifiers, defoamers and stabilizers. The heat reactive composition may contain equal or less than about 10% by weight, or equal or less than about 5% wt, or equal or less than about 4% wt, or equal or less than about 3% wt, or equal or less than about 2% wt, or equal or less than about 1% wt of any of the optional additives. In some embodiments, the heat reactive composition may not contain an emulsifier. All weight percentages are based on the total weight of the heat reactive composition.

The heat reactive composition may be produced by a method that provides an intimate blend of the aqueous acrylic resin, the expandable graphite, the FR additive and the polyhydroxy compound, without causing substantial expansion of the expandable graphite. In some embodiments, the expandable graphite, the FR additive, the polyhydroxy compound and any optional additive, for example, crosslinking agents, can be mixed or blended with the aqueous acrylic resin separately or concurrently with one another to form the heat reactive composition. Mixing methods include but are not limited to paddle mixer, blending and other low shear mixing techniques. In other methods, the intimate blend of aqueous acrylic resin, expandable graphite particles, the FR additive and the polyhydroxy compound is achieved by mixing the expandable graphite, the FR additive and the polyhydroxy compound with a monomer mixture and/or prepolymer prior to polymerization of the aqueous acrylic resin. The monomer mixture and or prepolymers can then be polymerized to produce the heat reactive composition. In methods which provide an intimate blend of the aqueous acrylic resin, the at least one FR additive, the at least one polyhydroxy compound, the expandable graphite particles or agglomerates, the expandable graphite can be coated or encapsulated by the aqueous acrylic resin prior to expansion of the graphite.

The textile composite also comprises an additional layer 108. The additional layer 108 is disposed on the heat reactive material so that the heat reactive material is between the meltable layer and the additional layer. In some embodiments, the additional layer 108 is attached or bonded by the heat reactive material 102, to the inner side 104 of the meltable layer 100 of the textile composite 10 (as illustrated in FIG. 1), and where in use, the outer side 104 of the meltable layer 100 is oriented to come in contact with flame or heat source. In some embodiments, the additional layer 108 might be made of thermally stable materials. Upon flame exposure, the meltable layer 100 melts towards the heat reactive material 102. As the expandable graphite in the heat reactive material 102 expands, the thermally stable additional layer 108 may hold the expanding heat reactive material 102 in place to facilitate the absorption of melt of the meltable layer 100.

The additional layer 108 may be a textile layer, a thermally stable textile layer, or a combination thereof. As disclosed above, textiles can be woven, knit, nonwoven textiles or multilayer combinations thereof. Examples of thermally stable textiles include, but are not limited to, aramids, flame resistant (FR) cottons, cottons, PBI, PBO, FR rayon, modacrylic blends, polyamines, carbon, fiberglass, PAN, and blends and combinations thereof.

Textile composites according to the disclosure can be produced by providing the meltable layer 100 and applying the heat reactive composition to one side 104 of the meltable layer 100, as exemplified by FIGS. 1 and 2. The additional layer 108 can then be applied to the heat reactive composition. The combined meltable layer, the heat reactive composition and the additional layer can then be dried and optionally cured by the application of heat. The temperature should be sufficiently high to evaporate at least a portion of the aqueous phase of the aqueous acrylic resin and at least a portion of any volatile compounds that might be present, but should be low enough so that the expandable graphite does not begin to expand. In some embodiments, the heating step can be via one or more heated rolls, wherein the heated roll(s) can serve to provide heat in order to drive off the water and optionally cure or crosslink the aqueous acrylic resin and to provide pressure in order to create a better bond between the meltable layer and the additional layer.

In other embodiments, a method of forming the textile composite 10 can include a) providing a meltable layer 100 and an additional layer 108; b) applying a heat reactive composition to the meltable layer, the additional layer or both, wherein the heat reactive composition comprises a polymer resin comprising aqueous acrylic resin, expandable graphite, and an FR additive; c) adhering the meltable layer and the additional layer together with the heat reactive composition sandwiched between the two layers to form a laminate; and d) heating the laminate to a temperature sufficient to remove at least a portion of the water from the aqueous acrylic resin and optionally crosslink the aqueous acrylic resin.

The heat reactive composition can be applied as a continuous layer, as depicted in FIG. 2, or, where enhanced air-permeability, water vapor permeability and/or hand is desired, the heat reactive composition may be applied discontinuously to form a layer of heat reactive composition having less than 100% surface coverage, as depicted in FIG. 1.

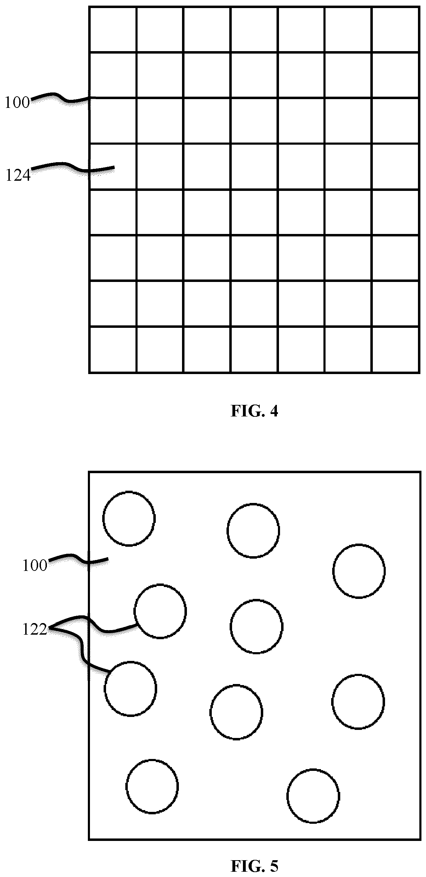

In other embodiments, a method of forming the textile composite 10 can include a) providing a meltable layer 100 and an additional layer 108; b) applying a heat reactive composition in a discontinuous pattern to the meltable layer, the additional layer or both, wherein the heat reactive composition comprises a polymer resin comprising aqueous acrylic resin, expandable graphite, an FR additive and a polyhydroxy compound; c) adhering the meltable layer and the additional layer together with the heat reactive composition sandwiched between the two layers to form a laminate; and d) heating the laminate to a temperature sufficient to remove at least a portion of the water from the aqueous acrylic resin and optionally crosslink the aqueous acrylic resin. A discontinuous application may provide less than 100% surface coverage by forms including but not limited to dots, grids, lines, and combinations thereof. FIGS. 4 and 5 illustrate examples in which the layer of heat reactive composition is provided in patterns of dots 122 and lines 124 as the heat reactive composition is applied discontinuously to, for example, the inner side 104 of the meltable layer 100. As used herein, the term "dot" means any shape that may be any discrete shape, for example, a circle, a square, a rectangular, a polygon or a combination thereof. The lines may have a straight shape, a corrugated shape, a curved shape or mixtures thereof. Depending on the pattern, the dots and lines can be arranged closer or wider to each other. In one embodiment as shown in FIG.4 the lines 124 are arranged in the form of a continuous grid.

In some embodiments with discontinuous coverage, the average distance between adjacent areas of the discontinuous pattern is less than the size of an impinging flame. In other embodiments, the average distance between adjacent dots or lines of the discontinuous pattern may be between 200 micrometers and 10 millimeters (mm). In other embodiments, the average distance between adjacent dots or lines of the discontinuous pattern may be between 0.25 mm and 10 mm. In other embodiments, the average distance between adjacent dots or lines of the discontinuous pattern may be between 1 mm and 10 mm. In other embodiments, the average distance between adjacent dots or lines of the discontinuous pattern may be between 4 mm and 10 mm. As used herein the distance between adjacent dots or lines means the average distance between the adjacent edges of two adjacent dots or lines. The average distance also means the average based on the edge to edge distance of at least 10 different pairs of dots or lines.

In some embodiments, the average distance between adjacent areas of the discontinuous pattern may be between 600 micrometers and 7.5 mm. In other embodiments, the average distance between adjacent areas of the discontinuous pattern may be between 600 micrometers and 4.5 mm. In other embodiments, the average distance between adjacent areas of the discontinuous pattern may be between 600 micrometers and 1 mm. In other embodiments, the average distance between adjacent areas of the discontinuous pattern may be between 600 micrometers and 0.75 mm. In some embodiments, the average distance between adjacent areas of the discontinuous pattern may be between 600 micrometers and 2.5 mm. In other embodiments, the average distance between adjacent areas of the discontinuous pattern may be between 600 micrometers and 1.2 mm. In other embodiments, the average distance between adjacent areas of the discontinuous pattern may be between 600 micrometers and 600 micrometers. In other embodiments, the average distance between adjacent areas of the discontinuous pattern may be between 1 mm and 2 mm.

In exemplary embodiments in which a discontinuous dot pattern is used, the dots have a diameter in the range of greater than or equal to 0.8 mm to 5 mm. In other embodiments, the dots have a diameter in the range of 0.9 mm to 4.5 mm. In other embodiments, the dots have a diameter in the range of 1.0 mm to 4.0 mm. In other embodiments, the dots have a diameter in the range of 1.0 mm to 3.5 mm. In other embodiments, the dots have a diameter in the range of 1.0 to 3.0 mm. In other embodiments, the dots have a diameter in the range of 1.0 mm to 2.5 mm.

In embodiments where properties such as hand, breathability, and/or textile weight are important, the heat reactive material 102 covers in the range of from greater than or equal to 20% to 100% of the surface area of the meltable layer 100. In other embodiments, the heat reactive material 102 covers in the range of from 25% to 80% of the surface area of the meltable layer 100. In other embodiments, the heat reactive material 102 covers in the range of from 25% to 75% of the surface area of the meltable layer 100. In other embodiments, the heat reactive material 102 covers in the range of from 25% to 55% of the surface area of the meltable layer 100. In other embodiments, the heat reactive material 102 covers in the range of from 25% to 40% of the surface area of the meltable layer 100. In other embodiments, the heat reactive material 102 covers in the range of from 25% to 35% of the surface area of the meltable layer 100.

In some embodiments, the heat reactive material 102 covers in the range of from 30% to 100% of the surface area of the meltable layer 100. In other embodiments, the heat reactive material 102 covers in the range of from 45% to 100% of the surface area of the meltable layer 100. In other embodiments, the heat reactive material 102 covers in the range of from 55% to 100% of the surface area of the meltable layer 100. In other embodiments, the heat reactive material 102 covers in the range of from 65% to 100% of the surface area of the meltable layer 100. In other embodiments, the heat reactive material 102 covers in the range of from 70% to 100% of the surface area of the meltable layer 100. In other embodiments, the heat reactive material 102 covers in the range of from 95% to 100% of the surface area of the meltable layer 100.

In some embodiments, the heat reactive material 102 covers in the range of from 30% to 70% of the surface area of the meltable layer 100. In other embodiments, the heat reactive material 102 covers in the range of from 45% to 65% of the surface area of the meltable layer 100. In other embodiments, the heat reactive material 102 covers in the range of from 25% to 50% of the surface area of the meltable layer 100. In other embodiments, the heat reactive material 102 covers in the range of from 65% to 90% of the surface area of the meltable layer 100. In other embodiments, the heat reactive material 102 covers in the range of from 70% to 80% of the surface area of the meltable layer 100.

Methods for achieving a coverage of less than 100% comprises applying the heat reactive composition by applying or printing the mixture onto a surface of the meltable layer or the additional layer or both by, for example, screen printing, rotary screen printing, gravure printing, spray or scatter coating, or knife coating. In some embodiments, screen printing or rotary screen printing of the heat reactive composition can allow for a relatively higher laydown (when compared to the laydown that can be achieved by a gravure roll) and a low percent area coverage which can allow for a relatively high air permeability of the textile composite. Using this method, the thickness of the screens may be increased because the heat reactive composition includes water. However, after printing, at least a portion of the water will be removed (e.g., evaporated) from the heat reactive material using a heat source, for example, an oven or a heated roll. Because water is removed from the heat reactive material 102 during heating, the mass of the heat reactive material 102 is reduced, in some embodiments, resulting in a lighter textile composite 10. In some embodiments, due to the removal of at least a portion of the water, the mass of the heat reactive material may be reduced as much as 20% or as much as 25% or as much as 30% or as much as 35% or as much as 40% or as much as 45%, when compared to the mass of the heat reactive composition prior to removal of the water.

The heat reactive composition may be applied in other forms in addition to dots, lines, or grids. Other methods for applying the heat reactive composition may include gravure printing, or spray or scatter coating or knife coating, provided the heat reactive composition may be applied in a manner in which the desired properties upon exposure to heat or flame are achieved.

In some embodiments, upon exposure of the textile composite to flames and/or heat, for example, a temperature greater than or equal to 280°C, the meltable layer begins to melt and the melt mixes with the heat reactive material, especially with the expanding graphite. This process can also form a char comprised of the meltable layer and the heat reactive material. In some embodiments, the char resulting from exposure of the meltable layer and the heat reactive material to heat and/or high temperatures, for example, greater than or equal to 280°C, is a heterogeneous melt mixture comprising at least the meltable layer and the expanded expandable graphite. A char, according to this disclosure, is meant to refer to the carbonaceous material remaining after exposing the meltable layer and the heat reactive material to a temperature of greater than or equal to 280°C. At temperatures greater than or equal to 280°C, one or both of the meltable layer and the aqueous acrylic resin may also oxidize or participate in the combustion process forming additional carbonaceous material that becomes part of the char. The formation of the char can help to insulate the layers below of the char from exposure to heat.

In some embodiments, the heat reactive material 102, upon expansion, forms a plurality of tendrils comprising expanded graphite. During the expansion process, the total volume of the heat reactive material 102 increases significantly when compared to the same mixture prior to expansion. In one embodiment, the volume of the heat reactive material 102 is increased at least five times after expansion. In another embodiment, the volume of the heat reactive material 102 is increased at least six times after expansion. In another embodiment, the volume of the heat reactive material 102 is increased at least seven times after expansion. In another embodiment, the volume of the heat reactive material 102 is increased at least eight times after expansion. In another embodiment, the volume of the heat reactive material 102 is increased at least nine times after expansion. In another embodiment, the volume of the heat reactive material 102 is increased at least ten times after expansion.

In embodiments where the textile composite 10 comprises a meltable layer 100, an additional layer 108 and heat reactive material 102 is applied in a pattern of discontinuous forms, the heat reactive material 102 expands forming tendrils that are loosely packed after expansion creating voids between the tendrils, as well as space between the pattern of the expanded heat reactive material 102. Upon exposure to flame, the meltable layer 100 melts and generally moves away from the open areas between the discontinuous forms of the heat reactive material 102. The thermally stable additional layer 108 supports the heat reactive material 102 during expansion and the melt of the meltable layer 100 is absorbed and retained by the expanding heat reactive material 102 during melting. By absorbing and retaining the melt, textile composites 10 can be formed that exhibit no melt-dripping and flammability is suppressed. Where the thermally stable additional layer 108 supports the expanding heat reactive material 102 during melt absorption, the thermally stable additional layer 108 may be protected from breaking open and hole formation. The increased surface area of the heat reactive material 102 upon expansion allows for absorption of the melt from the meltable layer 100 by the expanded heat reactive material 102 upon exposure to flame.

The textile composite 10 described herein exhibit enhanced properties due to the combination of the meltable layer 100, the heat reactive material comprising the aqueous acrylic resin, expandable graphite and FR additive, and the additional layer 108. For example, in some embodiments, the textile composite 10 has an afterflame of less than 2 seconds when tested for flame resistance according using the Horizontal Flame Test, described herein. Furthermore, in some embodiments, the textile composite 10 exhibits no melt drip, no hole formation and no spreading of the flame or glow to the edges thereof.

Because the heat reactive material comprises an aqueous acrylic resin in which water is subsequently removed, in some embodiments, textile composite may have a dry peel strength in the range of from about 5 to about 30 Newtons (N). The textile composite may have a dry peel strength in the range of from about 6 to about 30 N. The textile composite may have a dry peel strength in the range of from about 7 to about 30 N. The textile composite may have a dry peel strength in the range of from about 7 to about 22 N. The textile composite may have a dry peel strength in the range of from about 7 to about 25 N. The textile composite may have a dry peel strength in the range of from about 7 to about 22 N. The textile composite may have a dry peel strength in the range of from about 7 to about 21 N. The textile composite may have a dry peel strength in the range of from about 8 to about 22 N. The textile composite may have a dry peel strength in the range of from about 8 to about 23 N. The textile composite may have a dry peel strength in the range of from about 8 to about 24 N. The textile composite may have a dry peel strength in the range of from about 8 to about 25 N. The dry peel strength values are as measured in DIN 54310.

In some embodiments, the textile composite 10 is used in garments for use in hazardous environments, which is breathable and flame resistant, while being lightweight, flexible, and comfortable to wear. For example, in some embodiments, the textile composite 10 has a weight in the range of 80 to 240 grams per square meter (g/m²). In other embodiments, the textile composite 10 has a weight in the range of 80 to 200 g/m². In other embodiments, the textile composite 10 has a weight in the range of 80 to 180 g/m². In other embodiments, the textile composite 10 has a weight in the range of 80 to 165 g/m². In other embodiments, the textile composite 10 has a weight in the range of 80 to 150 g/m². In other embodiments, the textile composite 10 has a weight in the range of 80 to 125 g/m². In other embodiments, the textile composite 10 has a weight in the range of 80 to 100 g/m². In other embodiments, the textile composite 10 has a weight in the range of 80 to 90 g/m².

In some embodiments, the textile composite 10 has a weight in the range of 95 to 240 g/m². In other embodiments, the textile composite 10 has a weight in the range of 110 to 240 g/m². In other embodiments, the textile composite 10 has a weight in the range of 125 to 240 g/m². In other embodiments, the textile composite 10 has a weight in the range of 140 to 240 g/m². In other embodiments, the textile composite 10 has a weight in the range of 150 to 240 g/m². In other embodiments, the textile composite 10 has a weight in the range of 165 to 240 g/m². In other embodiments, the textile composite 10 has a weight in the range of 180 to 240 g/m².

In some embodiments, the textile composite 10 has a weight in the range of 115 to 160 g/m². In other embodiments, the textile composite 10 has a weight in the range of 95 to 150 g/m². In other embodiments, the textile composite 10 has a weight in the range of 165 to 190 g/m². In other embodiments, the textile composite 10 has a weight in the range of 135 to 175 g/m². In other embodiments, the textile composite 10 has a weight in the range of 85 to 100 g/m². All weigh measurements are performed by DIN EN 12127 (1997/12)

Furthermore, in some embodiments, the textile composite 10 has an air permeability of at least about 50 l/m²s. In other embodiments, the textile composite 10 has an air permeability in the range of about 50 to about 500 l/m²s. In other embodiments, the textile composite 10 has an air permeability in the range of about 100 to about 300 l/m²s. In other embodiments, the textile composite 10 has an air permeability in the range of about 130 to about 170 l/m²s. In other embodiments, the textile composite 10 has an air permeability in the range of about 140 to about 180 l/m²s. In other embodiments, the textile composite 10 has an air permeability in the range of about 150 to about 190 l/m²s. In other embodiments, the textile composite 10 has an air permeability in the range of about 120 to about 150 l/m²s. In other embodiments, the textile composite 10 has an air permeability in the range of about 75 to about 100 l/m²s.

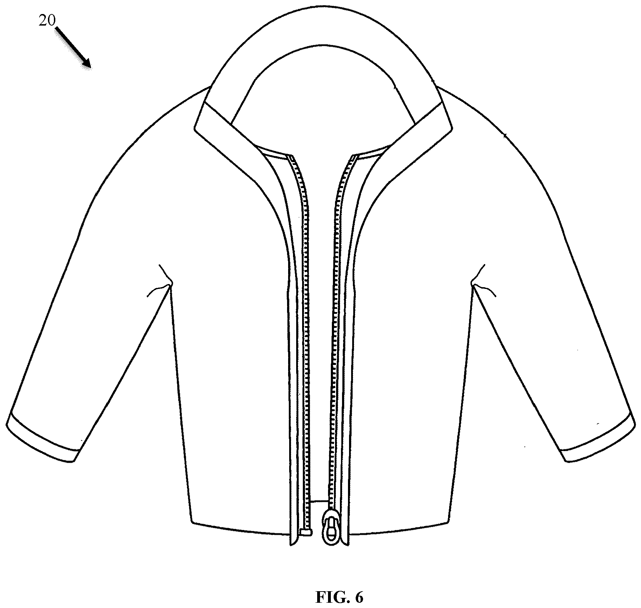

The disclosed textile composites having a meltable outer layer, a heat reactive material and an additional inner layer can be used as protective clothing. Protective clothing includes garments such as, for example a jacket 20, depicted in FIG. 6, trousers, shirts, vests, overalls as well as gloves, gaiters, hoods and shoes. When used in garments, the textile composite is oriented so that the meltable layer is exposed or positioned to the exterior area outside of the garment and the additional layer is positioned opposite the meltable textile.

Without intending to limit the scope of the present disclosure, the following test methods and examples illustrate how the present disclosure may be made and used.

### TEST METHODS

It should be understood that although certain methods and equipment are described below, other methods or equipment determined suitable by one of ordinary skill in the art may be alternatively utilized.

### Horizontal Flame Test

Textile material samples were tested in accordance with DIN EN ISO 15025A (April 2017) test standard. The meltable textile of the samples were exposed to flame for 10 seconds. Afterflame time was averaged for three samples. Textiles with afterflame of greater than two seconds were considered as flammable. Textiles having an afterflame of less than two seconds are considered non-flammable.

Samples of textiles and textile composites were tested for flame resistance in accordance with the DIN EN 15025A test standard. Samples were exposed to flame for 10 seconds. Textiles and textile composites with afterflame of greater than two (2) seconds were not considered flame resistant. Textiles and textile composites having an afterflame of less than two (2) seconds are considered flame resistant.

### Weight

Weight measurements on textile composites, meltable layers and additional layers described herein were conducted as specified in DIN EN 12127 (December 1997).

### Air Permeability

Air permeability of the textile composites described herein was measured as specified in DIN EN ISO 9237 (December 1995).

### Dry Peel Strength

Dry peel strength of the textile composites described herein was measured as specified in DIN 54310 1980-07.

### Laydown

Dry laydown of the heat reactive materials described herein was measured after drying and fixation of the textile composite based on the weight of the textile composite and the weight of the meltable layer and the additional layer.

### TMA Expansion Test

TMA (Thermo-mechanical analysis) was used to measure the expansion of expandable graphite particles. Expansion was tested with TA Instruments TMA 2940 instrument. A ceramic (alumina) TGA pan, measuring roughly 8 mm in diameter and 12 mm in height was used for holding the sample. Using the macroexpansion probe, with a diameter of roughly 6 mm, the bottom of the pan was set the zero. Then flakes of expandable graphite (about 15 mg) about 0.1-0.3 mm deep, as measured by the TMA probe, were put in the pan. The furnace was closed and initial sample height was measured. The furnace was heated from about 25°C to 600°C at a ramp rate of 10°C/min. The TMA probe displacement was plotted against temperature; the displacement was used as a measure of expansion.

### Furnace Expansion Test

A nickel crucible was heated in a hot furnace at 300°C for 2 minutes. A measured sample (about 0.5 grams) of expandable graphite was added to the crucible and placed in the hot furnace at 300°C for 3 minutes. After the heating period, the crucible was removed from the furnace and allowed to cool and then the expanded graphite was transferred to a measuring cylinder to measure the expanded volume. The expanded volume was divided by the original weight of the sample to get expansion in cubic centimeters/gram.

### DSC Endotherm Test

Tests were run on a Q2000 DSC from TA instruments using Tzero(tm) hermetic pans. For each sample, about 3 milligrams of expandable graphite was placed in the pan. The pan was vented by pressing the corner of a razor blade into the center, creating a vent that was approximately 2 millimeters long and less than 1 millimeter wide. The DSC was equilibrated at 20°C. Samples were then heated from 20°C to 400°C at 10°C/minute. Endotherm values were obtained from the DSC curves.

### EXAMPLES

### The following materials were used to make the examples:

EDOLAN^{®} AM 50% aqueous acrylic resin containing N-methylol acrylamide repeat units, EDOLAN^{®} XCI crosslinker, EDOLAN^{®} XTP thickener, and Emulsifier WN are all available from Tanatex Chemicals B.V., Ede, Netherlands. AFLAMMIT^{®} PMN 200 melamine polyphosphate is available from Thor GmbH, Speyer, Germany. Asbury 3626 expandable graphite, available from Asbury Carbons, Asbury, New Jersey, USA.

### Preparation of Comparative Heat Reactive Material 1

A mixture of 1000 parts by weight (pbw) EDOALN^{®} AM was mixed with 40 pbw EDOLAN^{®} XTP, 150 pbw Asbury 3626 expandable graphite, 150 pbw PMN 200 melamine flame retardant and 100 pbw glycerol. The mixture was then stirred for 1 minute to form the heat reactive composition.

### Preparation of Comparative Heat Reactive Material 2

A mixture of 1000 parts by weight (pbw) EDOALN^{®} AM was mixed with 40 pbw EDOLAN^{®} XTP, 150 pbw Asbury 3626 expandable graphite, 150 pbw PMN 200 melamine flame retardant, 100 pbw glycerol and 100 pbw water. The mixture was then stirred for 1 minute to form the heat reactive composition.

### Preparation of Comparative Heat Reactive Material A

A mixture of 1000 parts by weight (pbw) EDOALN^{®} AM was mixed with 40 pbw EDOLAN^{®} XTP, 40 pbw EDOLAN^{®} XCI, 200 pbw Asbury 3626 expandable graphite, 200 pbw PMN 200 melamine flame retardant and 5 pbw emulsifier WN. The mixture was then stirred for 1 minute to form the heat reactive composition.

### Preparation of Comparative Heat Reactive Material B

A mixture of 1000 parts by weight (pbw) EDOALN^{®} AM was mixed with 40 pbw EDOLAN^{®} XTP, 150 pbw Asbury 3626 expandable graphite, 150 pbw PMN 200 melamine flame retardant and 3 pbw emulsifier WN. The mixture was then stirred for 1 minute to form the heat reactive composition.

### Preparation of Comparative Heat Reactive Material C

A mixture of 1000 parts by weight (pbw) EDOALN^{®} AM was mixed with 40 pbw EDOLAN^{®} XTP, 150 pbw Asbury 3626 expandable graphite, 150 pbw PMN 200 melamine flame retardant and 60 pbw emulsifier WN. The mixture was then stirred for 1 minute to form the heat reactive composition.

**TABLE 1**

| Heat Reactive Materials - percentages by weight | | | | | |
|---|---|---|---|---|---|
| | Comparative heat reactive material A | Comparative heat reactive material B | Comparative heat reactive material C | Heat reactive material 1 | Heat reactive material 2 |
| EDOLAN^{®} AM | 67.3 | 74.5 | 71.4 | 69.4 | 64.9 |
| EDOLAN^{®} XTP | 2.7 | 3.0 | 2.9 | 2.8 | 2.6 |
| EDOLAN^{®} XCI | 2.7 | 0 | 0 | 0 | 0 |
| Asbury 3626 | 13.5 | 11.2 | 10.7 | 10.4 | 9.7 |
| PMN 200 | 13.5 | 11.2 | 10.7 | 10.4 | 9.7 |
| Emulsifier WN | 0.3 | 0.2 | 4.3 | 0 | 0 |
| Glycerol | 0 | 0 | 0 | 6.9 | 6.5 |
| Water | 0 | 0 | 0 | 0 | 6.5 |

### Preparation of laminate samples

Meltable Textile #1 was a 100% nylon 6,6 weave having a textile weight of 78±3 grams per square meter, and is available from Toray Industries, Tokyo, Japan.

Textile #2 was a 65% polyester 35% cotton blend having a textile weight of 76±5 grams per square meter and is available from Ames Europe, Enschede, the Netherlands.

### Preparation of Comparative Laminate C

Heat reactive material C was screen printed onto a 100% polyamide (nylon 6,6) plain weave substrate having a weight of 78±3 grams per square meter using the screen having a depth of 250µm, a 1.3 millimeter dot size and an area coverage of about 30.5% in order to achieve a wet laydown of the heat reactive composition of approximately 70-80 grams per square meter (gsm). After the heat reactive composition was printed onto the substrate, the screen was removed and a single knit jersey (65% polyester/35% cotton) fabric weighing 76±5 grams per square meter was applied onto the printed area. The 2-layer textile composite was dried at a temperature of 100°C for 30-60 seconds. The textile composite was dried for 60 seconds. The textile composite was then placed into a hot press that was set to a temperature of 160°C for an additional 60 seconds to crosslink the mixture. After aging for at least 24 hours, the textile composites were then tested for flame retardance using the horizontal flame test according to DIN EN ISO 15025A and the results reported in table 2.

### Preparation of Laminate 1

Heat reactive material #1 was screen printed onto a 100% polyamide (nylon 6,6) plain weave substrate having a weight of 78±3 grams per square meter using the screen having a depth of 250µm, a 1.3 millimeter dot size and an area coverage of about 30.5% in order to achieve a wet laydown of the heat reactive composition of approximately 70-80 grams per square meter (gsm). After the heat reactive composition was printed onto the substrate, the screen was removed and a single knit jersey (65% polyester/35% cotton) fabric weighing 76±5 grams per square meter was applied onto the printed area. The 2-layer textile composite was dried at a temperature of 100°C for 30-60 seconds. The textile composite was dried for 60 seconds. The textile composite was then placed into a hot press that was set to a temperature of 160°C for an additional 60 seconds to crosslink the mixture. After aging for at least 24 hours, the textile composites were then tested for flame retardance using the horizontal flame test according to DIN EN ISO 15025A and the results reported in table 2.

### Preparation of Laminate 2

Heat reactive material #2 was screen printed onto a 100% polyamide (nylon 6,6) plain weave substrate having a weight of 78±3 grams per square meter using the screen having a depth of 250µm, a 1.3 millimeter dot size and an area coverage of about 30.5% in order to achieve a wet laydown of the heat reactive composition of approximately 70-80 grams per square meter (gsm). After the heat reactive composition was printed onto the substrate, the screen was removed and a single knit jersey (65% polyester/35% cotton) fabric weighing 76±5 grams per square meter was applied onto the printed area. The 2-layer textile composite was dried at a temperature of 100°C for 30-60 seconds. The textile composite was dried for 60 seconds. The textile composite was then placed into a hot press that was set to a temperature of 160°C for an additional 60 seconds to crosslink the mixture. After aging for at least 24 hours, the textile composites were then tested for flame retardance using the horizontal flame test according to DIN EN ISO 15025A and the results reported in table 2.

### Preparation of Comparative Laminate A

Heat reactive material A was screen printed onto a 100% polyamide (nylon 6,6) plain weave substrate having a weight of 78±3 grams per square meter using the screen having a depth of 250µm, a 1.6 millimeter dot size in order to achieve a wet laydown of the heat reactive composition of approximately 70-80 grams per square meter (gsm). After the heat reactive composition was printed onto the substrate, the screen was removed and a single knit jersey (65% polyester/35% cotton) fabric weighing 76±5 grams per square meter was applied onto the printed area. The 2-layer textile composite was dried at a temperature of 100°C for 30-60 seconds. The textile composite was dried for 60 seconds. The textile composite was then placed into a hot press that was set to a temperature of 160°C for an additional 60 seconds to crosslink the mixture. After aging for at least 24 hours, the textile composites were then tested for flame retardance using the horizontal flame test according to DIN EN ISO 15025A and the results reported in table 2.

### Preparation of Comparative Laminate B

Heat reactive material B was screen printed onto a 100% polyamide (nylon 6,6) plain weave substrate having a weight of 78±3 grams per square meter using the screen having a depth of 250µm, a 1.3 millimeter dot size and an area coverage of about 30.5% in order to achieve a wet laydown of the heat reactive composition of approximately 70-80 grams per square meter (gsm). After the heat reactive composition was printed onto the substrate, the screen was removed and a single knit jersey (65% polyester/35% cotton) fabric weighing 76±5 grams per square meter was applied onto the printed area. The 2-layer textile composite was dried at a temperature of 100°C for 30-60 seconds. The textile composite was dried for 60 seconds. The textile composite was then placed into a hot press that was set to a temperature of 160°C for an additional 60 seconds to crosslink the mixture. After aging for at least 24 hours, the textile composites were then tested for flame retardance using the horizontal flame test according to DIN EN ISO 15025A and the results reported in table 2.

**TABLE 2**

| | Comparative laminate A | Comparative laminate B | Comparative laminate C | Laminate 1 | Laminate 2 |
|---|---|---|---|---|---|
| ISO 15025A 10 seconds (warp) | Pass | Pass | Burn | Pass | Pass |
| ISO 15025A, 10 seconds (weft) | Pass | Pass | Burn | Pass | Pass |

Laminate examples 1 and 2 show that despite the presence of glycerol and less of the expandable graphite in the heat reactive material, compared to the comparative heat reactive materials, they were able to achieve a passing grade in the flame test. Additionally, laminate examples 1 and 2 formed a char that was more stable than the char from comparative laminates A, B or C. Upon flexing and moving of the sample, the char did not break or fall off the sample. This would provide more protection as the char acts as an insulation layer.

Further, the heat reactive materials according to embodiments of the present disclosure exhibited improved processability resulting in laminate formed having a length of 500 meter or more.

The invention of this application has been described above both generically and with regard to specific embodiments. It will be apparent to those skilled in the art that various modifications and variations can be made in the embodiments without departing from the scope of the disclosure. Thus, it is intended that the embodiments cover the modifications and variations of this invention provided they come within the scope of the appended claims and their equivalents.

## Claims

1. A textile composite (10) comprising
a) a meltable layer (100);
b) a heat reactive material (102) comprising:
a polymer resin comprising an aqueous acrylic resin,
expandable graphite,
at least one flame retardant (FR) additive, and
at least one polyhydroxy compound;
c) an additional layer (108) disposed on the heat reactive material (102) so that the heat reactive material (102) is between the meltable layer (100) and the additional layer (108);
wherein the textile composite (10) has an afterflame of less than about 2 seconds.

2. The textile composite of claim 1, wherein the polyhydroxy compound has a molecular weight of less than about 1000 g/mol; or wherein the polyhydroxy compound is present in the heat reactive material in a range of from about 3 to 10 wt% of the polyhydroxy compound, based on a total weight of the heat reactive material.

3. The textile composite of any of the preceding claims, wherein the heat reactive material (102) is applied to the meltable layer (100), the additional layer (108) or both in a continuous or a discontinuous pattern.

4. The textile composite of any of the preceding claims, wherein the FR additive is melamine or polyphosphate or a combination thereof.

5. The textile composite of any of the preceding claims, wherein the heat reactive material (102) comprises in the range of from about 40 to about 90 wt% of acrylic polymer and from about 10 to about 60 wt% of a mixture of the expandable graphite and the polyhydroxy compound, based on a total weight of the heat reactive material.

6. The textile composite of any of the preceding claims, wherein the additional layer (108) is a textile layer, a thermally stable textile, or a combination thereof; or wherein the additional layer (108) is a meltable layer comprising at least one of a meltable textile or a meltable film.

7. The textile composite of any of the preceding claims, wherein the aqueous acrylic resin comprises acrylamide repeat units.

8. The textile composite of any of the preceding claims, wherein the aqueous acrylic resin comprises N-methylol acrylamide repeat units.

9. The textile composite of any of the preceding claims, wherein the polymer resin comprises at least 25 wt% aqueous acrylic resin and at least a polymer resin of the group comprising vinyl acetate, styrene, polyether, polyester, polyurethane, polyether polyurethane, polyester polyurethane, polycarbonate polyurethane or a copolymer or a blend thereof.

10. A garment comprising the textile composite (10) of any of the preceding claims.

11. A heat reactive composition comprising:
i) an aqueous acrylic resin;
ii) expandable graphite that expands at least about 900 micrometers upon heating at about 280°C, measured by the TMA expansion test; and
iii) at least one flame retardant additive,
iv) at least one polyhydroxy compound; and
v) water.

12. The heat reactive composition of claim 11, wherein the polyhydroxy compound has a molecular weight of less than 1000 g/mol.

13. The heat reactive composition of claim 11 or 12, wherein the heat reactive composition comprises in the range of from about 60 to about 80 wt% aqueous acrylic resin, from about 5 to about 10 wt% expandable graphite; from about 5 to about 10 wt% flame retardant additive, from about 5 to about 10 wt% the polyhydroxy compound, and from about 5 to about 10 wt% water, based on the total weight of the heat reactive composition.

14. The heat reactive composition of any one of claims 11 to 13, wherein the polyhydroxy compound is propane-1,2,3-triol and wherein the aqueous acrylic resin comprises acrylamide repeat units.

15. A method comprising;
a) providing a meltable layer (100) and an additional layer (108);
b) applying a heat reactive composition onto the meltable layer (100), the additional layer (108) or both, wherein the heat reactive composition comprises an aqueous acrylic resin, expandable graphite, at least one flame retardant additive, at least one polyhydroxy compound and water;
c) adhering the meltable layer (100) and the additional layer (108) together with the heat reactive composition sandwiched between the two layers to form a laminate (10); and
d) heating the laminate (10) to a temperature sufficient to remove at least a portion of the water from the aqueous acrylic resin.

## Patentansprüche

1. Textilverbundstoff (10), umfassend
a) eine schmelzbare Schicht (100);
b) ein wärmereaktives Material (102), umfassend:
ein Polymerharz, umfassend ein wässriges Acrylharz,
expandierbaren Graphit,
zumindest ein flammhemmendes (FR) Additiv, und
zumindest eine Polyhydroxyverbindung;
c) eine zusätzliche Schicht (108), die auf dem wärmereaktiven Material (102) angeordnet ist, sodass das wärmereaktive Material (102) zwischen der schmelzbaren Schicht (100) und der zusätzlichen Schicht (108) ist;
wobei der Textilverbundstoff (10) eine Nachbrennzeit von weniger als etwa 2 Sekunden aufweist.

2. Textilverbundstoff nach Anspruch 1, wobei die Polyhydroxyverbindung ein Molekulargewicht von weniger als etwa 1000 g/mol aufweist; oder wobei die Polyhydroxyverbindung in dem wärmereaktiven Material in einem Bereich von etwa 3 bis 10 Gew.-% der Polyhydroxyverbindung vorhanden ist, basierend auf einem Gesamtgewicht des wärmereaktiven Materials.

3. Textilverbundstoff nach einem der vorhergehenden Ansprüche, wobei das wärmereaktive Material (102) auf die schmelzbare Schicht (100), die zusätzliche Schicht (108) oder beide in einem kontinuierlichen oder einem diskontinuierlichen Muster aufgetragen ist.

4. Textilverbundstoff nach einem der vorhergehenden Ansprüche, wobei das FR-Additiv Melamin oder Polyphosphat oder eine Kombination davon ist.

5. Textilverbundstoff nach einem der vorhergehenden Ansprüche, wobei das wärmereaktive Material (102) in dem Bereich von etwa 40 bis etwa 90 Gew.-% Acrylpolymer und von etwa 10 bis etwa 60 Gew.-% eines Gemischs aus dem expandierbaren Graphit und der Polyhydroxyverbindung umfasst, basierend auf einem Gesamtgewicht des wärmereaktiven Materials.

6. Textilverbundstoff nach einem der vorhergehenden Ansprüche, wobei die zusätzliche Schicht (108) eine Textilschicht, ein thermisch stabiles Textil oder eine Kombination davon ist; oder wobei die zusätzliche Schicht (108) eine schmelzbare Schicht ist, die zumindest eines von einem schmelzbaren Textil oder einer schmelzbaren Folie umfasst.

7. Textilverbundstoff nach einem der vorhergehenden Ansprüche, wobei das wässrige Acrylharz Acrylamidwiederholungseinheiten umfasst.

8. Textilverbundstoff nach einem der vorhergehenden Ansprüche, wobei das wässrige Acrylharz N-Methylolacrylamidwiederholungseinheiten umfasst.

9. Textilverbundstoff nach einem der vorhergehenden Ansprüche, wobei das Polymerharz zumindest 25 Gew.-% wässriges Acrylharz und zumindest ein Polymerharz aus der Gruppe umfassend Vinylacetat, Styrol, Polyether, Polyester, Polyurethan, Polyetherpolyurethan, Polyesterpolyurethan, Polycarbonatpolyurethan oder ein Copolymer oder eine Mischung davon umfasst.

10. Kleidungsstück, das den Textilverbundstoff (10) nach einem der vorhergehenden Ansprüche umfasst.

11. Wärmereaktive Zusammensetzung, umfassend:
i) ein wässriges Acrylharz;
ii) expandierbaren Graphit, der zumindest etwa 900 Mikrometer bei Erhitzung bei etwa 280 °C expandiert, gemessen durch den TMA-Expansionstest; und
iii) zumindest ein flammhemmendes Additiv,
iv) zumindest eine Polyhydroxyverbindung; und
v) Wasser.

12. Wärmereaktive Zusammensetzung nach Anspruch 11, wobei die Polyhydroxyverbindung ein Molekulargewicht von weniger als 1000 g/mol aufweist.

13. Wärmereaktive Zusammensetzung nach Anspruch 11 oder 12, wobei die wärmereaktive Zusammensetzung in dem Bereich von etwa 60 bis etwa 80 Gew.-% wässriges Acrylharz, von etwa 5 bis etwa 10 Gew.-% expandierbaren Graphit; von etwa 5 bis etwa 10 Gew.-% flammhemmendes Additiv, von etwa 5 bis etwa 10 Gew.-% der Polyhydroxyverbindung und von etwa 5 bis etwa 10 Gew.-% Wasser umfasst, basierend auf dem Gesamtgewicht der wärmereaktiven Zusammensetzung.

14. Wärmereaktive Zusammensetzung nach einem der Ansprüche 11 bis 13, wobei die Polyhydroxyverbindung Propan-1,2,3-triol ist und wobei das wässrige Acrylharz Acrylamidwiederholungseinheiten umfasst.

15. Verfahren, umfassend;
a) Bereitstellen einer schmelzbaren Schicht (100) und einer zusätzlichen Schicht (108);
b) Auftragen einer wärmereaktiven Zusammensetzung auf die schmelzbare Schicht (100), die zusätzliche Schicht (108) oder beide, wobei die wärmereaktive Zusammensetzung ein wässriges Acrylharz, expandierbaren Graphit, zumindest ein flammhemmendes Additiv, zumindest eine Polyhydroxyverbindung und Wasser umfasst;
c) Verkleben der schmelzbaren Schicht (100) und der zusätzlichen Schicht (108) mit der wärmereaktiven Verbindung, die zwischen den zwei Schichten eingefügt ist, um ein Laminat (10) zu bilden; und
d) Erwärmen des Laminats (10) auf eine Temperatur, die ausreicht, um zumindest einen Teil des Wassers von dem wässrigen Acrylharz zu entfernen.

## Revendications

1. Composite textile (10) comprenant
a) une couche fusible (100) ;
b) un matériau thermoréactif (102) comprenant :
une résine polymère comprenant une résine acrylique aqueuse
un graphite expansible,
au moins un additif ignifugeant (FR), et
au moins un composé polyhydroxylé ;
c) une couche supplémentaire (108) disposée sur le matériau thermoréactif (102) de telle sorte que le matériau thermoréactif (102) se situe entre la couche fusible (100) et la couche supplémentaire (108) ;
le composite textile (10) comportant une durée de flamme résiduelle de moins d'environ 2 secondes.

2. Composite textile selon la revendication 1, dans lequel le composé polyhydroxylé comporte un poids moléculaire inférieur à environ 1000 g/mol ; ou dans lequel le composé polyhydroxylé est présent dans le matériau thermoréactif dans une plage d'environ 3 à 10 % en poids du composé polyhydroxylé, sur la base d'un poids total du matériau thermoréactif.

3. Composite textile selon l'une quelconque des revendications précédentes, dans lequel le matériau thermoréactif (102) est appliqué à la couche fusible (100), à la couche supplémentaire (108) ou aux deux en un motif continu ou discontinu.

4. Composite textile selon l'une quelconque des revendications précédentes, dans lequel l'additif FR est la mélamine ou un polyphosphate, ou une combinaison de ceux-ci.

5. Composite textile selon l'une quelconque des revendications précédentes, dans lequel le matériau thermoréactif (102) comprend un polymère acrylique dans la plage d'environ 40 à environ 90 % en poids, et environ 10 à environ 60 % en poids d'un mélange du graphite expansible et du composé polyhydroxylé, sur la base d'un poids total du matériau thermoréactif.

6. Composite textile selon l'une quelconque des revendications précédentes, dans lequel la couche supplémentaire (108) est une couche textile, un textile thermiquement stable, ou une combinaison de ceux-ci ; ou dans lequel la couche supplémentaire (108) est une couche fusible comprenant au moins l'un d'un textile fusible ou d'un film fusible.

7. Composite textile selon l'une quelconque des revendications précédentes, dans lequel la résine acrylique aqueuses comprend des unités de répétition d'acrylamide.

8. Composite textile selon l'une quelconque des revendications précédentes, dans lequel la résine acrylique aqueuse comprend des unités de répétition de N-méthylolacrylamide.

9. Composite textile selon l'une quelconque des revendications précédentes, dans lequel la résine polymère comprend au moins 25 % en poids de résine acrylique aqueuse et au moins une résine polymère du groupe comprenant : acétate de vinyle, styrène, polyéther, polyester, polyuréthane, polyéther polyuréthane, polyester polyuréthane, polycarbonate polyuréthane ou un copolymère ou un mélange de ceux-ci.

10. Vêtement comprenant le composite textile (10) selon l'une quelconque des revendications précédentes.

11. Composition thermoréactive comprenant :
i) une résine acrylique aqueuse ;
ii) un graphite expansible qui présente une dilatation d'au moins environ 900 micromètres lorsqu'il est chauffé à environ 280°C, mesurée par l'essai de dilatation TMA ; et
iii) au moins un additif ignifugeant,
iv) au moins un composé polyhydroxylé ; et
v) de l'eau.

12. Composition thermoréactive selon la revendication 11, dans laquelle le composé polyhydroxylé comporte un poids moléculaire inférieur à 1000 g/mol.

13. Composition thermoréactive selon la revendication 11 ou 12, dans laquelle la composition thermoréactive comprend une résine acrylique aqueuse dans la plage d'environ 60 à environ 80 % en poids, d'environ 5 à environ 10 % en poids de graphite expansible ; d'environ 5 à environ 10 % en poids d'additif ignifugeant, d'environ 5 à environ 10 % en poids du composé polyhydroxylé, et d'environ 5 à environ 10 % en poids d'eau, sur la base du poids total de la composition thermoréactive.

14. Composition thermoréactive selon l'une quelconque des revendications 11 à 13, dans laquelle le composé polyhydroxylé est propane-1,2,3-triol et dans laquelle la résine acrylique aqueuse comprend des unités de répétition d'acrylamide.

15. Procédé comprenant ;
a) la fourniture d'une couche fusible (100) et d'une couche supplémentaire (108) ;
b) l'application d'une composition thermoréactive sur la couche fusible (100), la couche supplémentaire (108) ou les deux, dans lequel la composition thermoréactive comprend une résine acrylique aqueuse, un graphite expansible, au moins un additif ignifugeant, au moins un composé polyhydroxylé et de l'eau ;
c) l'adhérence de la couche fusible (100) et de la couche supplémentaire (108) l'une à l'autre, avec la composition thermoréactive interposée entre les deux couches pour former un stratifié (10) ; et
d) le chauffage du stratifié (10) à une température suffisante pour enlever au moins une partie de l'eau de la résine acrylique aqueuse.
